# EUROPEAN PATENT APPLICATION

(11) **EP 4 834 723 A1**
(43) Date of publication of application: **04.11.2026**
(21) Application number: 24911966.0
(22) Date of filing: 23.10.2024
(51) Int. Cl.: B62D 25/04, B62D 25/06, B62D 49/00

(54) **CABIN FOR WORK VEHICLE**

(30) Priority: 27.12.2023 JP 2023220479
(71) Applicant: KUBOTA CORPORATION, Osaka-shi, Osaka 530-0011 (JP)
(72) Inventor: YASUNOBE Daisuke, Sakai-shi, Osaka 590-0908 (JP); ONO Akiyoshi, Sakai-shi, Osaka 590-0908 (JP); TSUJIMOTO Yuta, Sakai-shi, Osaka 590-0908 (JP); MASAKI Sayaka, Sakai-shi, Osaka 590-0908 (JP)
(74) Representative: Müller-Boré & Partner Patentanwälte PartG mbB
(86) International application number: PCT/JP2024/037783
(87) International publication number: WO 2025/142073

(57) **Abstract**

There is provided a cabin for a working vehicle capable of suppressing clogging of a filter with foreign matter. A cabin for a working vehicle having a roof in which a duct for guiding air is formed, includes: a left rear pillar 22L provided at a rear portion of the cabin and capable of guiding outside air to the roof; a filter 120 that purifies outside air introduced into the left rear pillar 22L; a filter housing portion 130 that houses the filter 120; and a louver 140 disposed on a cabin-exterior side relative to the filter housing portion 130 and provided so as to inhibit circulation of foreign matter.

## Description

### TECHNICAL FIELD

The present invention relates to a technique for a cabin for a working vehicle.

### BACKGROUND ART

Conventionally, a technique for a cabin for a working vehicle has been known. For example, such a technique is as described in Patent Literature 1.

Patent Literature 1 describes a cabin including an inner roof that forms a ceiling facing an interior of the cabin, and an outer roof provided on an upper side of the inner roof. An air-conditioning unit is housed between the inner roof and the outer roof.

In such cabins for working vehicles, some cabins introduce outside air into the air-conditioning unit through pillars constituting a framework of the cabin. The cabin requires a filter for purifying outside air. However, outside air around the working vehicle may contain a large amount of foreign matter such as snow and dust, and therefore there is a demand for a technique capable of suppressing clogging of the filter with foreign matter.

### CITATION LIST

### PATENT LITERATURE

Patent Literature 1: JP 2018-25893 A

### SUMMARY OF INVENTION

### TECHNICAL PROBLEM

One aspect of the present disclosure has been made in view of the situation as described above, and a problem to be solved by one aspect of the present disclosure is to provide a cabin for a working vehicle capable of suppressing clogging of a filter with foreign matter.

### SOLUTION TO PROBLEM

The problem to be solved by one aspect of the present disclosure is as described above, and next, a way of solving this problem will be described.

In one aspect of the present disclosure, there is provided a cabin for a working vehicle having a roof in which a duct for guiding air is formed, and the cabin includes: a rear pillar provided at a rear portion of the cabin and capable of guiding outside air to the roof; a filter that purifies outside air introduced into the rear pillar; a filter housing portion that houses the filter; and a louver disposed on a cabin-exterior side relative to the filter housing portion and provided so as to inhibit circulation of foreign matter.

According to one aspect of the present disclosure, the louver makes it possible to suppress clogging of the filter with foreign matter (snow, dust, and the like).

In one aspect of the present disclosure, the louver includes a slat formed so as to extend upward from the cabin-exterior side toward a cabin-interior side.

According to one aspect of the present disclosure, the slat makes foreign matter less likely to pass through the slat, and makes it possible to suppress clogging of the filter with foreign matter.

In one aspect of the present disclosure, a plurality of the slats is provided, and is disposed so that at least some portions of the slats overlap each other as viewed from the cabin-exterior side.

According to one aspect of the present disclosure, foreign matter is made less likely to pass between the plurality of slats, and clogging of the filter with foreign matter is effectively suppressed.

In one aspect of the present disclosure, the slat includes a body portion extending upward from the cabin-exterior side toward the cabin-interior side, and an upper bent portion formed so as to bend upward from an end portion of the body portion on the cabin-interior side.

According to one aspect of the present disclosure, the upper bent portion can inhibit circulation of foreign matter, and therefore clogging of the filter with foreign matter can be effectively suppressed.

In one aspect of the present disclosure, the slat includes a body portion extending upward from the cabin-exterior side toward the cabin-interior side, and a lower bent portion formed so as to bend downward from an end portion of the body portion on the cabin-exterior side.

According to one aspect of the present disclosure, the lower bent portion can inhibit circulation of foreign matter, and therefore clogging of the filter with foreign matter can be effectively suppressed.

In one aspect of the present disclosure, the louver further includes a support portion that supports the slat, and is attached to the filter housing portion.

According to one aspect of the present disclosure, the louver can be installed by using the filter housing portion, and therefore simplification of the configuration can be achieved.

In one aspect of the present disclosure, the filter housing portion is formed with a cover portion that covers an upper end portion of the support portion from above.

According to one aspect of the present disclosure, adherence of water to the filter after traveling along between the upper end portion of the support portion and the filter housing portion can be suppressed.

### ADVANTAGEOUS EFFECTS OF INVENTION

According to one aspect of the present disclosure, clogging of the filter with foreign matter can be suppressed.

### BRIEF DESCRIPTION OF DRAWINGS

Fig. 1 is a left side view showing an overall configuration of a tractor according to one aspect of the present disclosure.
Fig. 2 is a rear perspective view showing a cabin.
Fig. 3 is an exploded rear perspective view showing a cabin frame and a roof.
Fig. 4 is a left side view showing a structure around a left rear pillar.
Fig. 5 is an exploded perspective view of Fig. 4.
Fig. 6 is a left side view showing a louver.
Fig. 7 is a cross-sectional view taken along line A1-A1 in Fig. 4.
Fig. 8 is a cross-sectional view taken along line A2-A2 in Fig. 7.
Fig. 9 is an exploded rear perspective view showing the roof.
Fig. 10 is an exploded rear perspective view showing an inner roof, a first cover member, and a second cover member.
Fig. 11 is a plan view of Fig. 10.
Fig. 12 is a plan view schematically showing the inner roof and a duct.
Fig. 13 is a cross-sectional view taken along line A3-A3 in Fig. 11.
Fig. 14 is a cross-sectional view taken along line A4-A4 in Fig. 11.
Fig. 15(a) is a rear perspective view showing the first cover member, and Fig. 15(b) is a rear perspective view showing the second cover member.
Fig. 16 is a plan view showing the roof.
Fig. 17 is an enlarged plan view showing a left front portion of the roof.
Fig. 18 is a cross-sectional view taken along line A5-A5 in Fig. 17.
Fig. 19 is a plan view showing a seal member.
Fig. 20 is a right side view showing a structure around heating wires.
Fig. 21 is an enlarged right side view showing the left rear pillar, a first fixing member, and a second fixing member.
Fig. 22 is a front perspective view of Fig. 21.

### DESCRIPTION OF EMBODIMENT

In the following description, directions indicated by arrow U, arrow D, arrow F, arrow B, arrow L, and arrow R in the drawings are defined as an upward direction, a downward direction, a forward direction, a backward direction, a leftward direction, and a rightward direction, respectively. Note that the forward direction is a forward travel direction of a tractor 1, and the backward direction is a reverse travel direction of the tractor 1.

First, an overall configuration of the tractor 1, which is a working vehicle including a cabin 10 according to one aspect of the present disclosure, will be described.

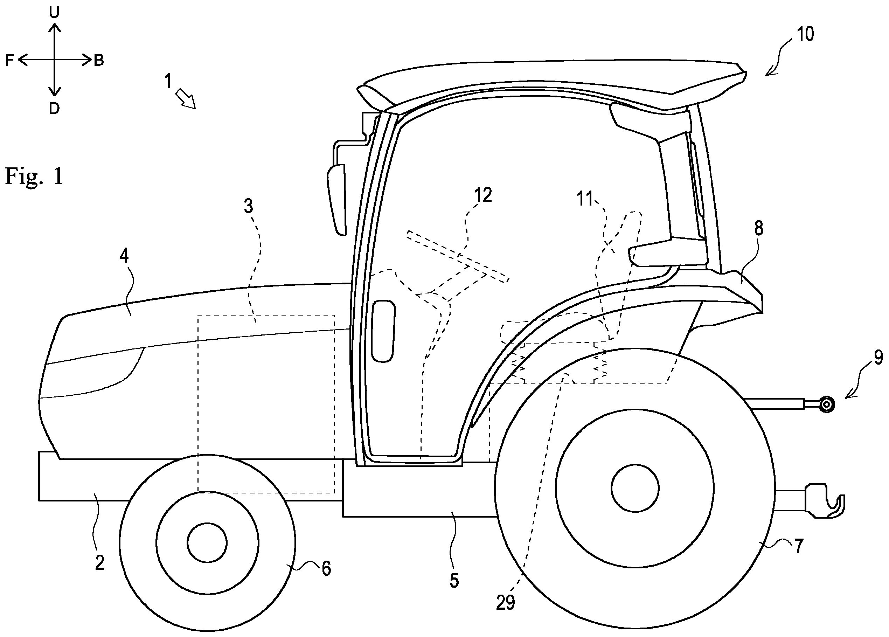

The tractor 1 shown in Fig. 1 mainly includes a vehicle body frame 2, an engine 3, a bonnet 4, a mission case 5, front wheels 6, rear wheels 7, fenders 8, a lifting device 9, the cabin 10, and the like.

The vehicle body frame 2 is a frame-shaped member formed by appropriately combining a plurality of panel members. The vehicle body frame 2 is disposed at a front portion of the tractor 1 with a longitudinal direction of the vehicle body frame 2 oriented in a forward-backward direction. The engine 3 is fixed to a rear portion of the vehicle body frame 2. The engine 3 is covered with the bonnet 4. The mission case 5 is provided behind the engine 3. The mission case 5 houses a transmission (not shown) that shifts power from the engine 3.

A front portion of the vehicle body frame 2 is supported by a pair of left and right front wheels 6 through a front axle mechanism (not shown). A rear portion of the mission case 5 is supported by a pair of left and right rear wheels 7 through a rear axle mechanism (not shown). The pair of left and right rear wheels 7 are generally covered from above by the fenders 8.

The lifting device 9 is provided behind the mission case 5. Various working implements (for example, a cultivator and the like) can be attached to the lifting device 9. The lifting device 9 can raise and lower the attached working implements by an actuator such as a hydraulic cylinder.

After being shifted by the transmission (not shown) or the like housed in the mission case 5, power from the engine 3 is transmitted to the front axle mechanism and can be transmitted to the front wheels 6 through the front axle mechanism. In addition, power shifted by the transmission can be transmitted to the rear wheels 7 through the rear axle mechanism. Thus, the front wheels 6 and the rear wheels 7 are rotationally driven by power from the engine 3, and the tractor 1 can travel. In addition, power from the engine 3 can drive the working implements attached to the lifting device 9.

The cabin 10 is provided behind the engine 3. The cabin 10 is placed on a vehicle body (mission case 5 and the like). An interior space in which an occupant rides is formed inside the cabin 10. A seat 11 for an occupant to sit on is disposed in the interior space. In addition, a steering wheel 12 for adjusting a turning angle of the front wheels 6 is disposed at a front portion of the cabin 10.

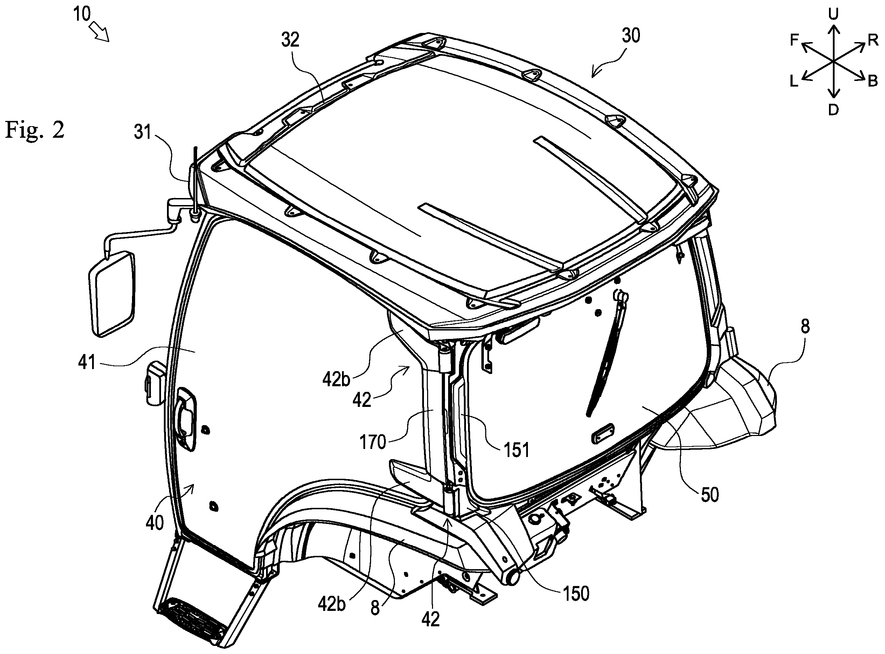

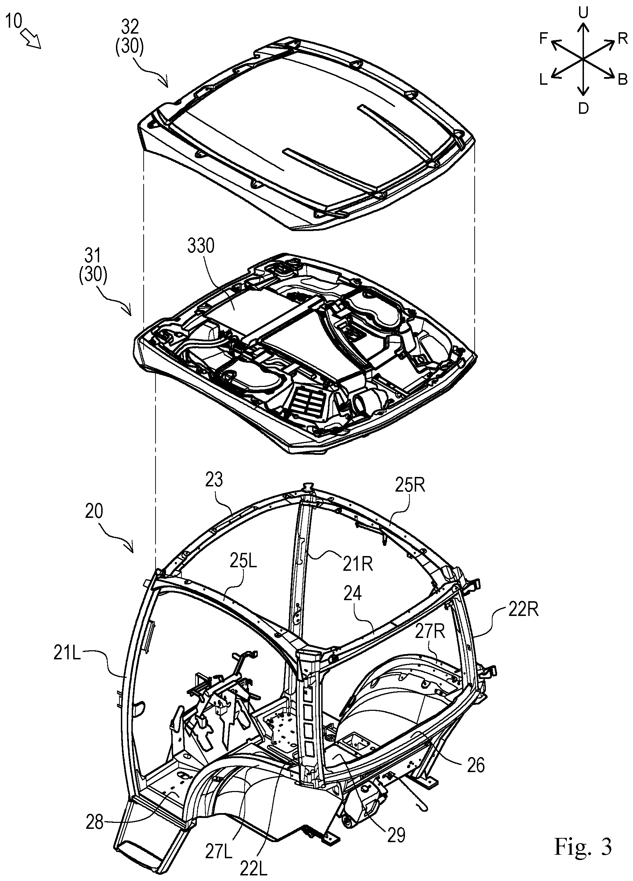

Next, a configuration of the cabin 10 will be described. As shown in Figs. 2 and 3, the cabin 10 mainly includes a cabin frame 20, a roof 30, a door 40, a rear panel 50, and the like.

The cabin frame 20 shown in Fig. 3 constitutes a framework of the cabin 10. The cabin frame 20 is formed by combining elongated frame members, plate-like members, and the like. Specifically, the cabin frame 20 mainly includes a left front pillar 21L, a right front pillar 21R, a left rear pillar 22L, a right rear pillar 22R, a front beam 23, a rear beam 24, a left side beam 25L, a right side beam 25R, a rear lower frame 26, a left side lower frame 27L, a right side lower frame 27R, a step 28, a floor sheet 29, and the like.

The left front pillar 21L, the right front pillar 21R, the left rear pillar 22L, and the right rear pillar 22R are disposed with longitudinal directions thereof oriented substantially in an upward-downward direction. The left front pillar 21L and the right front pillar 21R are disposed at a front portion of the cabin 10 while being spaced apart from each other in a leftward-rightward direction. The left rear pillar 22L and the right rear pillar 22R are disposed at a rear portion of the cabin 10 while being spaced apart from each other in the leftward-rightward direction.

As described above, the cabin frame 20 of the present embodiment is a four-post cabin frame without a center pillar between the front pillars 21L and 21R and the rear pillars 22L and 22R. Note that a configuration of the cabin frame 20 is not limited to the present embodiment and may be changed as desired. For example, the cabin frame 20 may be configured as a six-post cabin frame in which center pillars are disposed between the front pillars 21L and 21R and the rear pillars 22L and 22R.

The front beam 23, the rear beam 24, the left side beam 25L, and the right side beam 25R constitute an upper portion of the cabin frame 20. The front beam 23 and the like are disposed with longitudinal directions thereof oriented substantially in a horizontal direction. The front beam 23 is disposed so as to connect upper end portions of the left front pillar 21L and the right front pillar 21R to each other. The rear beam 24 is disposed so as to connect upper end portions of the left rear pillar 22L and the right rear pillar 22R to each other. The left side beam 25L is disposed so as to connect upper end portions of the left front pillar 21L and the left rear pillar 22L to each other. The right side beam 25R is disposed so as to connect upper end portions of the right front pillar 21R and the right rear pillar 22R to each other. In this way, the front beam 23, the rear beam 24, the left side beam 25L, and the right side beam 25R are formed in a rectangular frame shape in plan view.

The rear lower frame 26 is disposed so as to connect lower end portions of the left rear pillar 22L and the right rear pillar 22R to each other. The left side lower frame 27L is disposed so as to extend forward and downward from the left rear pillar 22L. The right side lower frame 27R is disposed so as to extend forward and downward from the right rear pillar 22R. The left side lower frame 27L and the right side lower frame 27R are formed in a curved shape in side view so as to bulge forward and upward, and the fenders 8 (see Figs. 1 and 2) are each fixed to lower portions of the left side lower frame 27L and the right side lower frame 27R.

A step 28 constituting a floor is disposed at a lower portion of the cabin frame 20. The step 28 is fixed to lower end portions of the left front pillar 21L, the right front pillar 21R, the left side lower frame 27L, and the right side lower frame 27R. A floor sheet 29 for placing the seat 11 at a position higher than the step 28 is provided behind the step 28.

The roof 30 is provided on top of the cabin frame 20 and covers the seat 11 from above. The roof 30 mainly includes an inner roof 31 and an outer roof 32.

The inner roof 31 is fixed on top of the cabin frame 20 and constitutes a ceiling inside the cabin 10. An air-conditioning unit 330 and the like to be described later are disposed on an inner side of the inner roof 31. The outer roof 32 is disposed on an upper side of the inner roof 31 and is fixed on top of the inner roof 31. The outer roof 32 is formed so as to cover the inner roof 31 from above.

As shown in Fig. 2, doors 40 are provided openably and closably at left and right side portions of the cabin frame 20 (entrances/exits of the cabin 10) through a pair of upper and lower hinges 42. A rear panel 50 is provided openably and closably at a rear portion of the cabin frame 20. A front panel is also provided at a front portion of the cabin frame 20 (not shown). In this way, an interior space surrounded by the roof 30, the doors 40, the rear panel 50, and the front panel is formed in the cabin 10.

In the cabin 10 according to the present embodiment, outside air can be introduced into an interior of the roof 30 through the left rear pillar 22L. Air in the interior space (interior air) can also be introduced into the interior of the roof 30 through the inner roof 31. The air-conditioning unit 330 in the roof 30 air-conditions air in the roof 30. Air conditioned by the air-conditioning unit 330 is blown into the interior space. Structures related to circulation of air as described above will be described below in order.

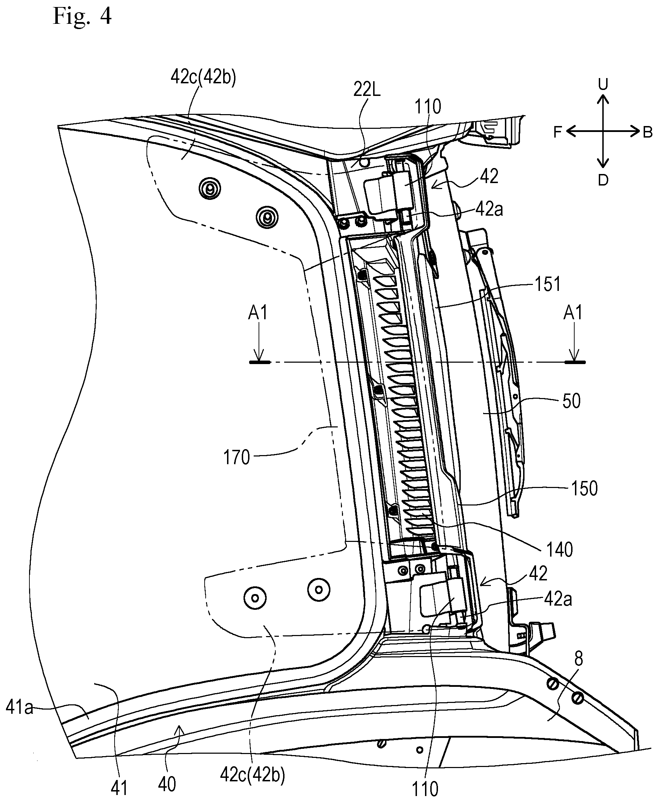

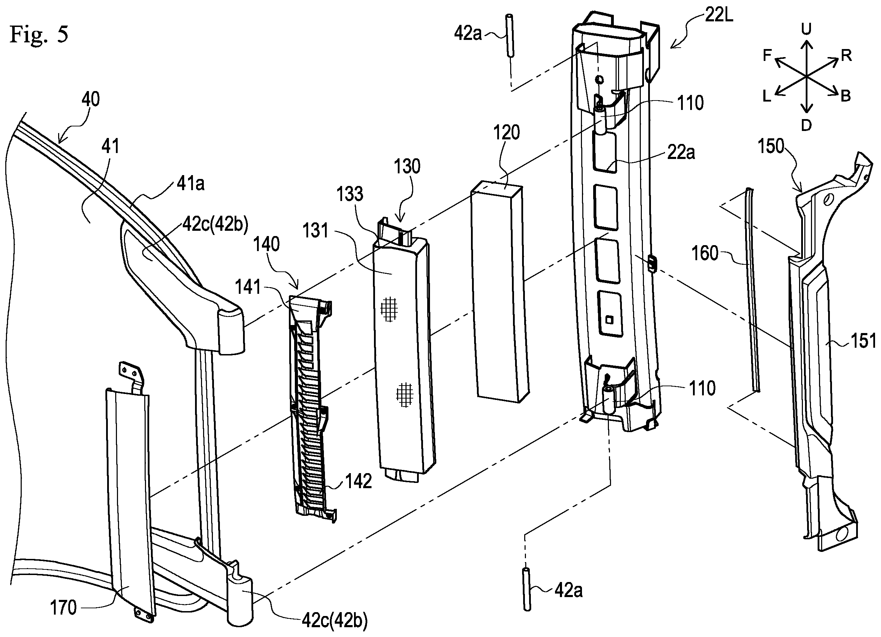

First, a structure of the left rear pillar 22L shown in Figs. 4 and 5 and a surrounding area of the left rear pillar 22L (louver 140 and the like) will be described.

The left rear pillar 22L shown in Fig. 5 is formed in an elongated shape extending vertically. The left rear pillar 22L is also formed in a curved shape slightly bulging outward in the leftward-rightward direction. The left rear pillar 22L is formed in a hollow shape having a substantially rectangular cross section. On a side surface of the left rear pillar 22L facing substantially leftward, a plurality of openings 22a that communicate an interior and an exterior of the left rear pillar 22L are formed. In the illustrated example, a left side surface of the left rear pillar 22L is shown as an example in which four rectangular openings 22a are formed so as to be aligned vertically. The left rear pillar 22L can introduce outside air from the openings 22a. Outside air introduced into the left rear pillar 22L can circulate upward through the left rear pillar 22L and can circulate into the roof 30 from an upper end portion of the left rear pillar 22L.

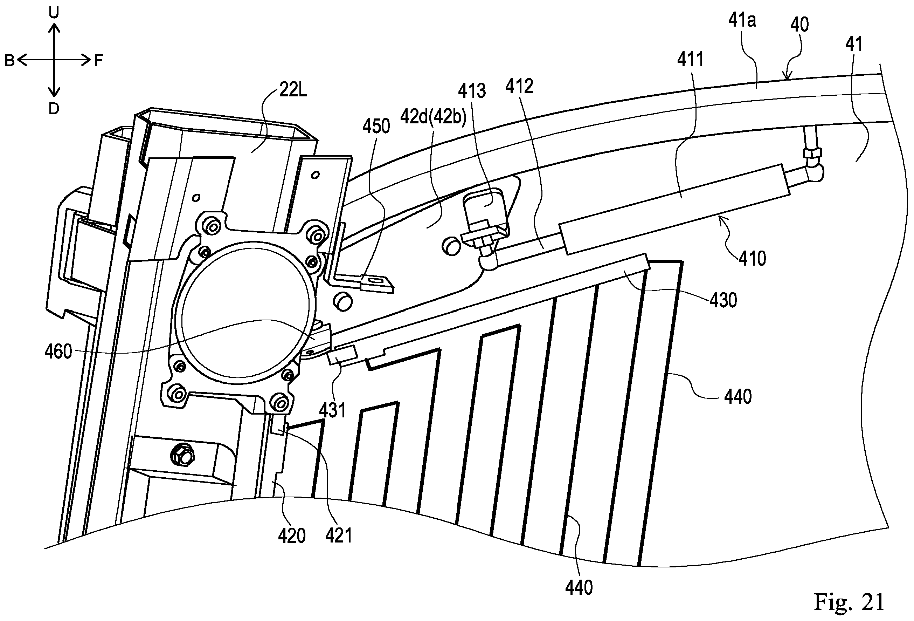

A pair of upper and lower door support portions 110 are provided on the left rear pillar 22L. Each door support portion 110 is formed in a cylindrical shape with an axial direction oriented vertically. As shown in Figs. 4 and 5, a rotational shaft 42a of the hinge 42 is inserted through the door support portion 110. The rotational shaft 42a rotatably supports a fixed portion 42b of the hinge 42. The fixed portion 42b has an outer fixed portion 42c disposed on an outer side of the door 40, and an inner fixed portion 42d (see Fig. 21) disposed on an inner side of the door 40. The door 40, the outer fixed portion 42c, and the inner fixed portion 42d are fixed to one another by fasteners such as bolts. Thus, the hinge 42 connects the door 40 to the left rear pillar 22L openably and closably by the rotational shaft 42a and the fixed portion 42b.

The left rear pillar 22L is also provided with a filter housing portion 130 and the louver 140. The left rear pillar 22L is also provided with a first cover member 150 and a second cover member 170 so as to cover the filter housing portion 130 and the like.

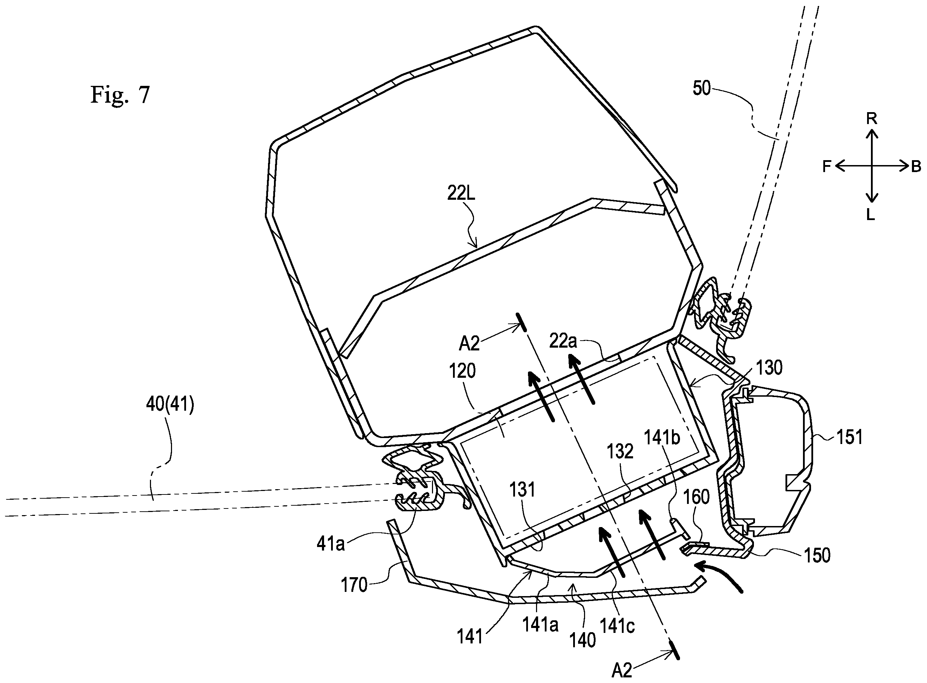

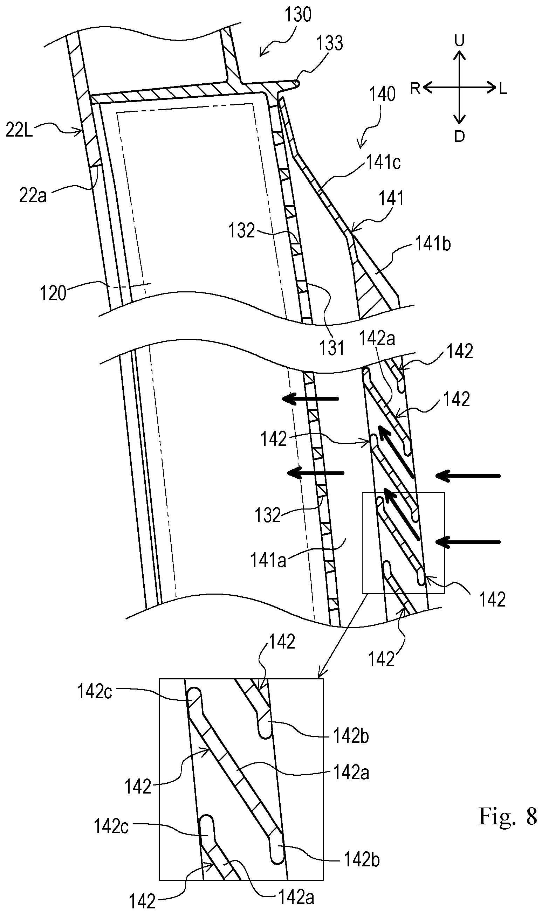

The filter housing portion 130 shown in Figs. 5 and 7 is for housing the filter 120. The filter housing portion 130 is formed in a hollow substantially rectangular parallelepiped shape elongated vertically. The filter housing portion 130 is formed along the left rear pillar 22L (in a curved shape slightly bulging outward in the leftward-rightward direction). A projecting portion 133 projecting leftward is also formed at a left upper end portion of the filter housing portion 130 (see Figs. 5 and 8). A right side surface of the filter housing portion 130 is open. A left side surface (introduction surface 131) of the filter housing portion 130 is formed in a mesh shape in which many minute openings 132 are formed. Air can circulate through the openings 132 in a direction orthogonal to the introduction surface 131. As a result, air can circulate from an exterior of the filter housing portion 130 to an interior of the filter housing portion 130 through the introduction surface 131 of the filter housing portion 130.

Inside the filter housing portion 130, the filter 120 having a substantially rectangular parallelepiped shape elongated vertically is housed. The filter 120 can remove dust contained in air and can purify the air.

The filter housing portion 130 is fixed to the left rear pillar 22L in a state in which the filter 120 is housed. At this time, the filter housing portion 130 is disposed so that all of the openings 22a formed in the left side surface of the left rear pillar 22L are covered by the filter housing portion 130.

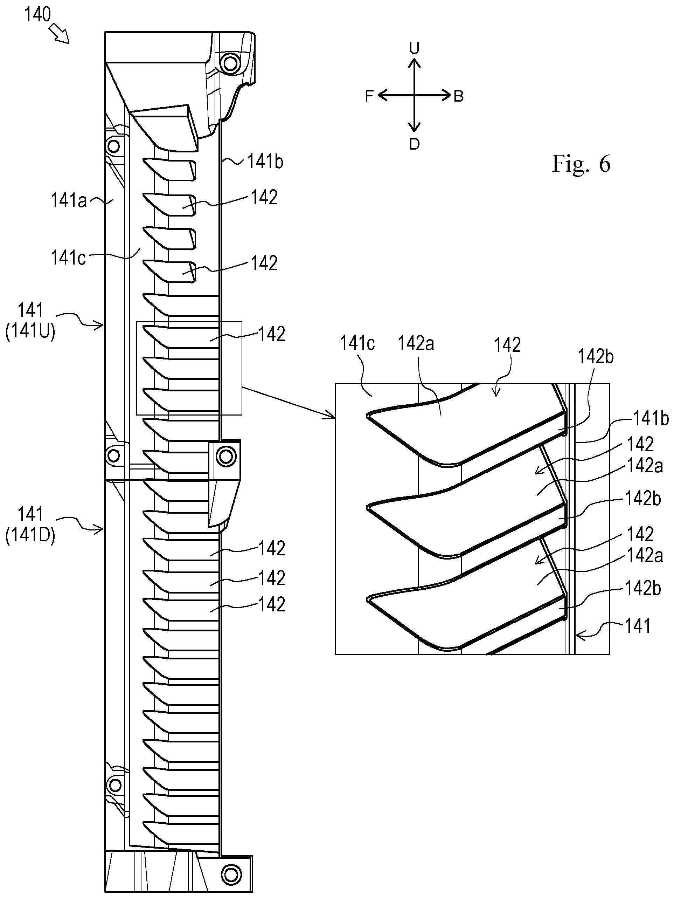

The louver 140 shown in Figs. 5 and 6 is for suppressing clogging of the filter 120 with foreign matter. The louver 140 is disposed on a left side (cabin-exterior side) of the filter housing portion 130. Note that the portion shown in enlarged form in Fig. 6 is a front perspective view of a middle portion of the louver 140 in the upward-downward direction. As shown in Figs. 6 and 8, the louver 140 includes a support portion 141 and slats 142.

The support portion 141 is a portion for supporting the slats 142. The support portion 141 is formed in an elongated shape elongated vertically. A vertical length of the support portion 141 is formed so as to be substantially the same as a vertical length of the left side surface of the filter housing portion 130. The support portion 141 is also formed along the left rear pillar 22L. In the present embodiment, the support portion 141 is divided into two portions, namely an upper portion 141U and a lower portion 141D, in the upward-downward direction, and the upper portion 141U and the lower portion 141D are fixed to each other.

As shown in Figs. 6 and 7, the support portion 141 includes a front wall portion 141a, a rear wall portion 141b, and a left wall portion 141c. The front wall portion 141a constitutes a front portion of the support portion 141. The front wall portion 141a is disposed so as to face left-frontward. The rear wall portion 141b constitutes a rear portion of the support portion 141. The rear wall portion 141b is disposed so as to face backward. The left wall portion 141c constitutes a left portion of the support portion 141. The left wall portion 141c is disposed so as to face leftward and is disposed between the front wall portion 141a and the rear wall portion 141b.

The support portion 141 is fixed to the left side surface of the filter housing portion 130. The support portion 141 (louver 140) is disposed so as to cover a front portion of the introduction surface 131 of the filter housing portion 130. In addition, as shown in Fig. 8, an upper end portion of the support portion 141 is covered from above by the projecting portion 133 of the filter housing portion 130 (overlaps in plan view).

The slats 142 shown in Figs. 6 and 8 are plate-like portions for changing a circulation direction of outside air. The slats 142 are provided on the left wall portion 141c. In the present embodiment, the slats 142 are formed integrally with the left wall portion 141c. A plurality of the slats 142 is provided at intervals from one another in the upward-downward direction. Outside air that has circulated to the louver 140 can circulate to the filter housing portion 130 through spaces between upper and lower slats 142. Each slat 142 includes a body portion 142a, a lower bent portion 142b, and an upper bent portion 142c.

The body portion 142a is a plate-like portion formed from an upper portion to a lower portion of the slat 142. The body portion 142a is disposed with a plate surface facing left-upward. The body portion 142a is formed so as to incline upward to the right (extend upward from the cabin-exterior side toward the cabin-interior side).

The lower bent portion 142b is formed so as to bend downward from a lower end portion (end portion on the cabin-exterior side) of the body portion 142a. The upper bent portion 142c shown in Fig. 8 is formed so as to bend upward from an upper end portion (end portion on the cabin-interior side) of the body portion 142a.

The slats 142 are disposed so that at least some portions overlap one another as viewed from the cabin-exterior side (in side view). In the present embodiment, of two slats 142 adjacent to each other vertically, the upper bent portion 142c of the lower slat 142 and the lower bent portion 142b of the upper slat 142 are disposed so as to overlap each other (see the slats 142 shown in enlarged form in Fig. 8).

The louver 140 is molded, for example, by filling a mold (cavity) with a material. Here, the support portion 141 is formed in a curved shape slightly bulging outward in the leftward-rightward direction so as to extend along the left rear pillar 22L. By molding the support portion 141 in a vertically divided state (divided into the upper portion 141U and the lower portion 141D), the mold can be more easily removed during molding of the louver 140.

The first cover member 150 shown in Figs. 5 and 7 is formed in an elongated shape extending vertically. The first cover member 150 is formed of, for example, a resin material. A vertical length of the first cover member 150 is formed so as to be substantially the same as a vertical length of the left rear pillar 22L. The first cover member 150 is formed in a concave shape open forward. A rear combination lamp 151 in which a plurality of lamps such as a brake lamp and a turn indicator lamp are integrated is provided on a rear surface of the first cover member 150.

As shown in Fig. 7, the first cover member 150 is disposed so that a rear portion of the filter housing portion 130 and a rear end portion of the louver 140 are positioned inside the first cover member 150. As a result, the first cover member 150 can conceal a rear portion of the filter housing portion 130 (a rear surface of the filter housing portion 130 and a rear portion of the introduction surface 131) and the rear end portion of the louver 140 from a cabin-exterior side (rear side) of the cabin 10.

The elongated member 160 shown in Figs. 5 and 7 is an elongated member extending vertically. The elongated member 160 is constituted by an elastic member such as rubber. The elongated member 160 is attached to a left front end portion on an inner side surface of the first cover member 150. As a result, a gap between the louver 140 and the first cover member 150 is reduced, and outside air is made less likely to circulate through the gap. In addition, because the elongated member 160 is constituted by an elastic member, an inner side surface of the first cover member 150 can be protected.

The second cover member 170 is formed in an elongated shape extending vertically. The second cover member 170 is formed of a material different from that of the first cover member 150 (for example, a metal material or the like). A vertical length of the second cover member 170 is formed so as to be substantially the same as a distance between the pair of upper and lower hinges 42 of the door 40. The second cover member 170 is formed in a substantially rectangular plate shape with a plate surface oriented in the leftward-rightward direction.

The second cover member 170 is disposed so as to extend between the pair of upper and lower hinges 42 of the door 40. As shown in Fig. 7, a rear end portion of the second cover member 170 is disposed so as to overlap a left front end portion of the first cover member 150 in the leftward-rightward direction. A front end portion of the second cover member 170 is disposed so as to be positioned forward of a front end portion of the filter housing portion 130. The front end portion of the second cover member 170 is also disposed so as to be positioned forward of a rear end portion of the door 40. As a result, the second cover member 170 can conceal a front portion of the filter housing portion 130 (a front surface of the filter housing portion 130 and the introduction surface 131) and the louver 140 from a cabin-exterior side (left side) of the cabin 10. The second cover member 170 is disposed so as to leave predetermined gaps between the second cover member 170 and the first cover member 150, the louver 140, and the door 40.

In this way, the filter housing portion 130 and the louver 140 are concealed from the rear side and the left side by the first cover member 150 and the second cover member 170. The introduction surface 131 of the filter housing portion 130 is also concealed by the louver 140, the first cover member 150, and the second cover member 170 so as not to be exposed to an exterior as viewed from a circulation direction of air circulating through the introduction surface 131 (namely, a direction perpendicular to the introduction surface 131).

A state in which outside air is introduced from the left rear pillar 22L configured as described above will be described with reference to Figs. 7 and 8.

When air is sucked by a blower 320 disposed in the roof 30 to be described later, outside air is introduced through the openings 22a of the left rear pillar 22L, and the outside air circulates upward in the left rear pillar 22L and is guided to the roof 30. The outside air circulates to the louver 140 through a gap between the first cover member 150 and the second cover member 170 shown in Fig. 7. The outside air passes through the louver 140 and the filter housing portion 130 (introduction surface 131), is dedusted by the filter 120 housed in the filter housing portion 130, and is then introduced into the left rear pillar 22L.

Here, because the first cover member 150 and the second cover member 170 are disposed in a direction toward which the introduction surface 131 of the filter housing portion 130 faces (direction perpendicular to the introduction surface 131), outside air does not circulate straight toward the introduction surface 131 of the filter housing portion 130 in a perpendicular direction, but circulates so as to bypass the first cover member 150 and the second cover member 170.

Specifically, outside air behind the second cover member 170 circulates forward through a gap between the first cover member 150 and the second cover member 170, and then circulates to the louver 140. In this way, by making a circulation path of outside air introduced into the left rear pillar 22L (louver 140) more complex, intrusion of foreign matter such as snow and dust can be suppressed.

Outside air that has circulated to the louver 140 also passes between upper and lower slats 142 shown in Fig. 8. At this time, the outside air circulates right-upward along shapes of the slats 142. By guiding the outside air upward in this manner, even when foreign matter (snow, dust, and the like) circulates with the outside air to the louver 140, circulation of the foreign matter can be inhibited and the foreign matter can be made less likely to pass through the louver 140. As a result, clogging of the filter 120 with foreign matter can be suppressed.

In particular, because the upper bent portion 142c and the lower bent portion 142b are formed on the slats 142 of the present embodiment, a circulation path of outside air passing through the louver 140 can be made more complex. As a result, foreign matter can be made less likely to pass through the louver 140.

In addition, as described above, an upper end portion of the louver 140 is covered from above by the projecting portion 133 of the filter housing portion 130. With this configuration, even when water reaches an upper surface of the filter housing portion 130 during washing of the tractor 1 or the like, the water can be dropped to a left side of the gap (left wall portion 141c in the present embodiment) so that the water does not enter a gap between the support portion 141 and the introduction surface 131. As a result, adherence of water to the filter 120 through the gap during washing or the like can be suppressed.

Note that the louver 140 only needs to be capable of inhibiting circulation of foreign matter, and a configuration of the louver 140 is not limited to the present embodiment. For example, in the present embodiment, the slats 142 of the louver 140 are described as being formed with the lower bent portion 142b and the upper bent portion 142c, but the configuration is not limited to this, and at least one of the lower bent portion 142b and the upper bent portion 142c may be omitted. As a result, simplification of a configuration of the slats 142 can be achieved. The support portion 141 is also described as being fixed to the filter housing portion 130, but the configuration is not limited to this, and the support portion 141 may be fixed to another member (for example, the first cover member 150 or the like).

Next, a structure of the roof 30 will be described.

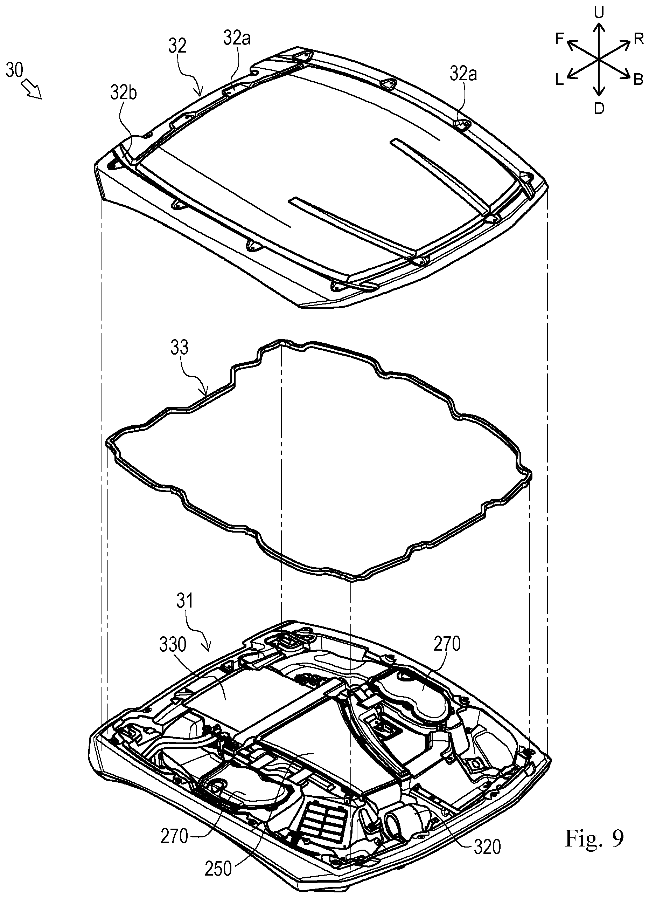

As shown in Fig. 9, the roof 30 includes the inner roof 31, the outer roof 32, the seal member 33, and the like. Devices such as the air-conditioning unit 330 are housed in the roof 30 (inner roof 31). First, a configuration of the inner roof 31 will be described.

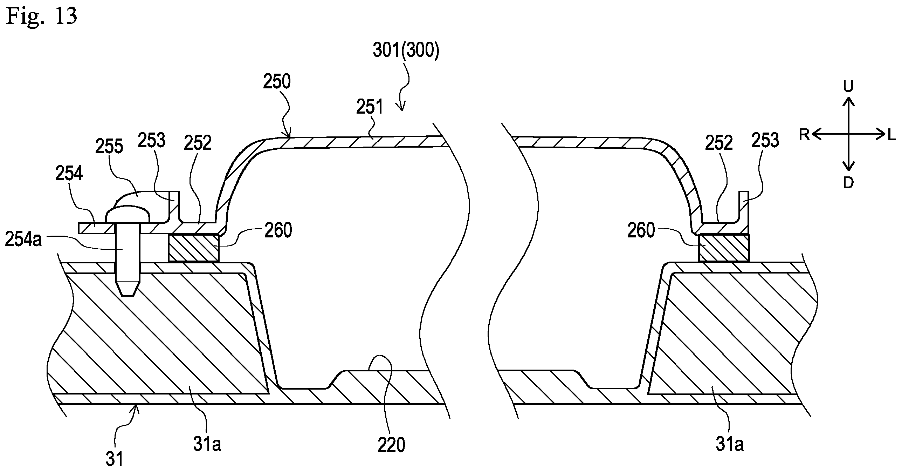

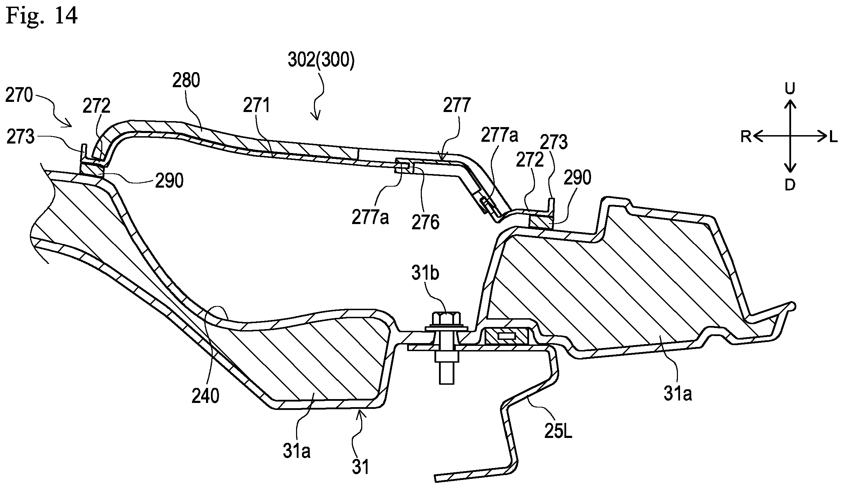

The inner roof 31 is formed in a substantially rectangular shape in plan view and has a size approximately equal to a size of a frame formed by the front beam 23, the rear beam 24, and the like. The inner roof 31 has a hollow cross section, and a material having heat insulating properties (for example, foam beads 31a) is filled in an interior of the hollow cross section (Figs. 13 and 14).

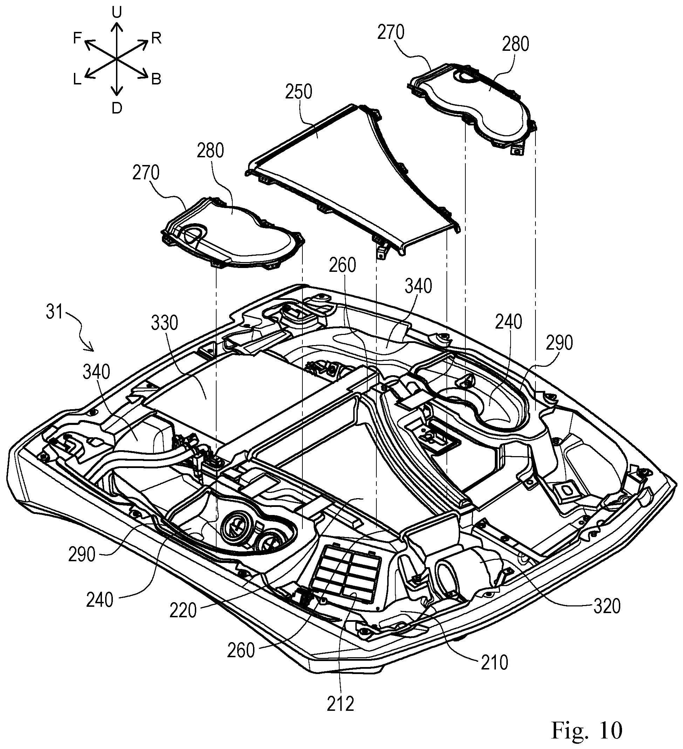

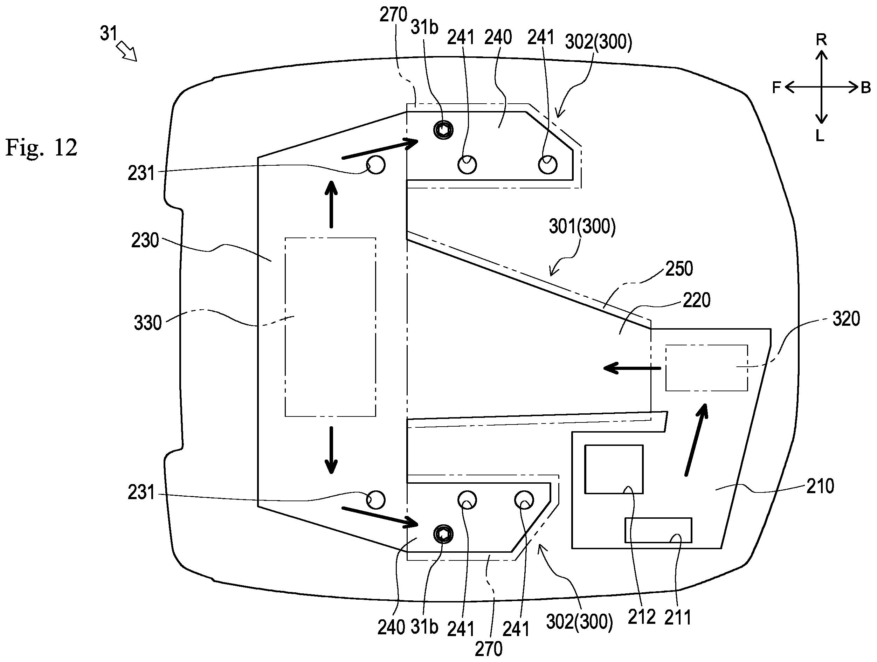

A plurality of recesses is formed in an upper surface of the inner roof 31. As shown in Figs. 10 to 12, the recesses form an introduction portion 210, a first guide portion 220, an air-conditioning housing portion 230, and second guide portions 240 in the inner roof 31. Note that Fig. 12 schematically shows a shape of the inner roof 31 for explanation.

The introduction portion 210 is formed at a left rear portion of the inner roof 31. More specifically, the introduction portion 210 is formed backward of a front-rear center of the inner roof 31 in the forward-backward direction. The introduction portion 210 is also formed so as to extend from a vicinity of a left end portion of the inner roof 31 to a vicinity of a left-right center of the inner roof 31 in the leftward-rightward direction. An outside air introduction port 211 and an interior air introduction port 212 are formed in the introduction portion 210 so as to penetrate the inner roof 31 vertically.

The outside air introduction port 211 is formed at a left rear portion of the introduction portion 210. The outside air introduction port 211 is connected to an upper end of the left rear pillar 22L. As a result, outside air guided by the left rear pillar 22L is introduced into the introduction portion 210 through the outside air introduction port 211.

The interior air introduction port 212 is formed right-frontward of the outside air introduction port 211. The interior air introduction port 212 is formed so as to open to the interior space of the cabin 10. As a result, interior air of the cabin 10 is introduced into the introduction portion 210 through the interior air introduction port 212.

The first guide portion 220 shown in Figs. 10 and 12 is formed so as to extend in the forward-backward direction in a substantially central portion of the inner roof 31 in the leftward-rightward direction. A rear end portion of the first guide portion 220 is connected to a right end portion of the introduction portion 210. A front end portion of the first guide portion 220 is connected to the air-conditioning housing portion 230 to be described later. The first guide portion 220 is formed so that a left-right width gradually increases from backward to forward.

The air-conditioning housing portion 230 shown in Fig. 12 is formed at a front portion of the inner roof 31. More specifically, the air-conditioning housing portion 230 is formed forward of the front-rear center of the inner roof 31 in the forward-backward direction. The air-conditioning housing portion 230 is also formed so as to extend from a vicinity of the left end portion of the inner roof 31 to a vicinity of the right end portion of the inner roof 31. A front end portion of the first guide portion 220 is connected to a left-right central portion of a rear end of the air-conditioning housing portion 230. Outlets 231 are formed in the air-conditioning housing portion 230 so as to penetrate the inner roof 31 vertically.

The outlets 231 are formed at respective left and right end portions of the air-conditioning housing portion 230. The outlets 231 are formed so as to open to the interior space of the cabin 10. As a result, conditioned air from the air-conditioning unit 330 to be described later is blown into the cabin 10 through the outlets 231.

The second guide portions 240 shown in Figs. 10 and 12 are formed at respective left and right sides of the first guide portion 220. The second guide portions 240 are connected to respective left and right end portions of the air-conditioning housing portion 230. The second guide portions 240 are formed so as to extend backward from the air-conditioning housing portion 230. Outlets 241 are formed in the second guide portions 240 so as to penetrate the inner roof 31 vertically.

Two outlets 241 are formed in each of the left and right second guide portions 240. The outlets 241 are formed so as to open to the interior space of the cabin 10. As a result, conditioned air from the air-conditioning unit 330 to be described later is blown into the cabin 10 through the outlets 241.

The inner roof 31 configured in this manner is fixed from above to the cabin frame 20, as shown in Fig. 3. More specifically, the inner roof 31 is fixed to the front beam 23 and the like by fasteners 31b such as bolts in a state in which the inner roof 31 is placed on the front beam 23, the rear beam 24, the left side beam 25L, and the right side beam 25R.

Here, as shown in Figs. 12 and 14, among the fasteners 31b for fixing the inner roof 31 to the cabin frame 20, some of the fasteners 31b are provided inside recesses formed in the inner roof 31. For example, Figs. 12 and 14 show a fastener 31b provided inside the left second guide portion 240. The fastener 31b is disposed at a front portion of the second guide portion 240.

In this way, effective use of an internal space of the roof 30 can be achieved by disposing the fastener 31b inside the recess instead of disposing the fastener 31b so as to avoid the recess. Specifically, because the fastener 31b needs to be fixed to an upper portion of the cabin frame 20 (the front beam 23, the rear beam 24, the left side beam 25L, and the right side beam 25R), the fastener 31b is provided at a position overlapping the front beam 23 and the like in plan view. By disposing the fastener 31b inside the recess, the recess can be formed to a position outward of the fastener 31b.

As shown in Figs. 10 and 12, cover members are fixed to an upper surface of the inner roof 31. Specifically, a first cover member 250 is fixed to the first guide portion 220 of the inner roof 31, and a second cover member 270 is fixed to the second guide portions 240. The first cover member 250 and the second cover member 270 will be described below.

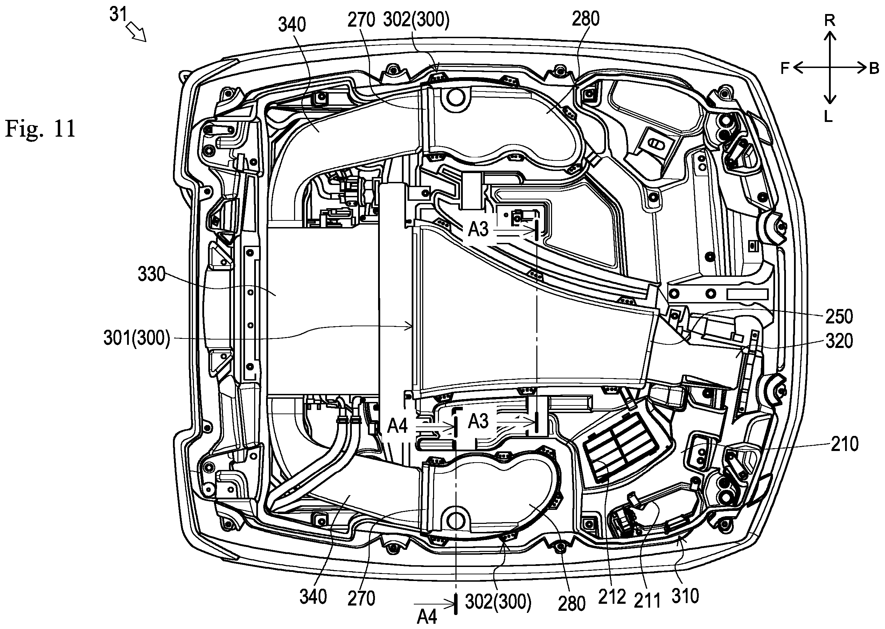

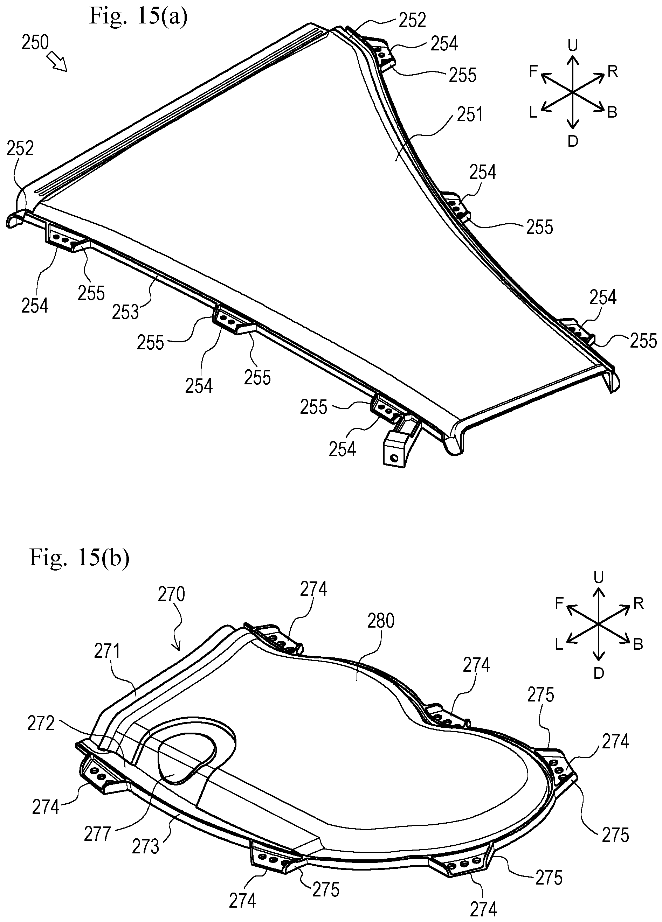

The first cover member 250 shown in Figs. 11 and 13 is for covering the first guide portion 220. The first cover member 250 is formed in a shape slightly larger than the first guide portion 220 in plan view. The first cover member 250 is constituted by, for example, resin. As shown in Fig. 13 and Fig. 15(a), the first cover member 250 includes a body portion 251, abutment portions 252, first ribs 253, attachment portions 254, and second ribs 255.

The body portion 251 is formed in a substantially U-shape in front view so as to bulge upward. The body portion 251 is formed so as to follow a shape of the second guide portion 240 in plan view (so that a left-right width gradually increases from backward to forward). The body portion 251 is formed so that a front portion and a rear portion are open.

The abutment portions 252 are each a portion brought into abutment with the first seal member 260 to be described later. The abutment portions 252 protrude leftward/rightward outward from lower end portions of the body portion 251. The abutment portions 252 are each formed from a front end portion to a rear end portion of the body portion 251. In addition, the abutment portions 252 are formed at respective left and right end portions of the body portion 251.

The first ribs 253 protrude upward from leftward/rightward outer end portions of the respective abutment portion 252. The first ribs 253 are each formed from a front end portion to a rear end portion of the abutment portion 252. In addition, the first ribs 253 are formed at the respective left and right abutment portions 252. The first rib 253 makes it possible to reinforce the abutment portion 252.

The attachment portion 254 is formed in a flat plate shape with a plate surface oriented in the upward-downward direction. The attachment portions 254 are each formed on leftward/rightward outer sides of the first rib 253. The attachment portion 254 are formed at respective left and right sides of the body portion 251. In addition, a plurality of the left and right attachment portions 254 is formed in the forward-backward direction.

The second ribs 255 protrude upward from a front end portion and a rear end portion of the attachment portion 254. The second rib 255 is formed on each of the plurality of attachment portions 254. The second rib 255 makes it possible to reinforce the attachment portion 254.

As shown in Fig. 13, the first seal members 260 are disposed between the first cover member 250 and the inner roof 31. The first seal members 260 are for sealing the first guide portion 220 and the first cover member 250. The first seal members 260 are constituted by an elastically deformable material (for example, rubber or the like). Each of the first seal member 260 is formed in an elongated shape along the abutment portion 252. The first seal members 260 are provided on respective left and right sides of the first guide portion 220.

The first cover member 250 is fixed to the inner roof 31 by attachment of fasteners 254a (bolts or the like) to the attachment portions 254 in a state in which the first seal member 260 is disposed between the first cover member 250 and the inner roof 31. Thus, in the present embodiment, the first guide portion 220 is covered with the first cover member 250, and the duct 300 is formed. Hereinafter, the duct 300 formed by the first guide portion 220 and the first cover member 250 will be referred to as the "first duct 301."

The first seal member 260 is elastically deformed between the abutment portion 252 and the inner roof 31 in a state in which the first cover member 250 is fixed to the inner roof 31. As a result, the first seal member 260 seals the abutment portion 252 and the inner roof 31, and air leakage can be suppressed. In addition, because the first rib 253 and the second rib 255 are formed on the first cover member 250, deformation of the abutment portion 252 and the attachment portions 254 due to restoring force of the first seal member 260 or the like can be suppressed.

The second cover member 270 shown in Figs. 10 and 11 is for covering the second guide portion 240. The second cover member 270 is formed in a shape slightly larger than the second guide portion 240 in plan view. The second cover member 270 is constituted by, for example, resin. A pair of left and right second cover members 270 are provided. Below, a configuration of the second cover member 270 will be described by taking the left second cover member 270 shown in Fig. 14 and Fig. 15(b) as an example. The second cover member 270 includes a body portion 271, abutment portions 272, first ribs 273, attachment portions 274, second ribs 275, an opening 276, and an opening/closing portion 277.

The body portion 271 is formed in a concave shape bulging upward. The body portion 271 is formed so as to follow a shape of the second guide portion 240 in plan view. A heat insulating material 280 is provided on an upper surface of the body portion 271. The heat insulating material 280 is formed so as to cover an entire region of the body portion 271 except for the opening 276 to be described later. The abutment portions 272, the second ribs 275, the attachment portions 274, and the second ribs 275 are configured similarly to the abutment portions 252 and the like of the first cover member 250.

The opening 276 shown in Fig. 14 is a portion that communicates a space inside the duct 300 to be described later with a space outside the duct 300. The opening 276 is formed at a left front portion of the body portion 271. The opening 276 is formed in a circular shape and penetrates the body portion 271. Note that a shape of the opening 276 is not limited to the present embodiment (circular shape) and may be changed as desired.

The opening/closing portion 277 shown in Fig. 14 and Fig. 15(b) is a portion for opening and closing the opening 276. The opening/closing portion 277 is constituted by, for example, an elastically deformable material (for example, rubber or the like). The opening/closing portion 277 is formed in a disk shape having an outer diameter larger than the opening 276. As shown in Fig. 14, a groove portion 277a engageable with the opening 276 is formed on an outer periphery of the opening/closing portion 277. The opening/closing portion 277 can close the opening 276 by engagement of the groove portion 277a with the opening 276.

Between the second cover member 270 and the inner roof 31, the second seal member 290 is disposed in the same manner as in the case of the first cover member 250. The second seal member 290 is constituted by an elastically deformable material (for example, rubber or the like). The second seal member 290 is formed in an elongated shape along the abutment portion 272.

The second cover member 270 is fixed to the inner roof 31 by attachment of fasteners such as bolts to the attachment portions 274 in a state in which the second seal member 290 is disposed between the second cover member 270 and the inner roof 31. Thus, in the present embodiment, the second guide portion 240 is covered with the second cover member 270, and the duct 300 is formed. Hereinafter, the duct 300 formed by the second guide portion 240 and the second cover member 270 will be referred to as the "second duct 302."

The second seal member 290 is elastically deformed between the abutment portion 272 and the inner roof 31 in a state in which the second cover member 270 is fixed to the inner roof 31. As a result, the second seal member 290 seals the abutment portion 272 and the inner roof 31, and air leakage can be suppressed.

The opening 276 is also disposed above the fastener 31b disposed in the second guide portion 240 in a state in which the second cover member 270 is fixed to the inner roof 31. The opening 276 is opened by removal of the opening/closing portion 277. As a result, attachment/detachment and the like of the fastener 31b can be performed through the opening 276, and workability can be improved.

Note that a position of the opening 276 is not limited to the present embodiment as long as the position allows attachment/detachment and the like of the fastener 31b through the opening 276 (position corresponding to the fastener 31b). For example, the opening 276 may be disposed at a position horizontally shifted relative to the fastener 31b in plan view to an extent that allows attachment/detachment of the fastener 31b with a tool.

Next, devices housed in the roof 30 will be described. As shown in Fig. 11, the roof 30 houses an inside-outside air switching mechanism 310, the blower 320, the air-conditioning unit 330, and guide members 340.

The inside-outside air switching mechanism 310 switches air introduced into the roof 30 to either outside air or interior air by opening and closing the outside air introduction port 211 formed in the introduction portion 210. A configuration of the inside-outside air switching mechanism 310 is not particularly limited. For example, the inside-outside air switching mechanism 310 can open and close the outside air introduction port 211 by rotating a plate-like member having approximately the same size as the outside air introduction port 211 with a drive source such as a motor.

The blower 320 is a device for feeding air to the air-conditioning unit 330. The blower 320 is disposed at a right portion of the introduction portion 210 (in a vicinity of a connection portion with the first guide portion 220). The blower 320 can feed air in the introduction portion 210 toward the first duct 301.

The air-conditioning unit 330 shown in Figs. 11 and 12 is a device for performing air conditioning. The air-conditioning unit 330 is disposed at a left-right central portion of the air-conditioning housing portion 230. An air introduction port of the air-conditioning unit 330 is connected to the first duct 301.

The guide members 340 guide air conditioned by the air-conditioning unit 330 to the second guide portions 240. The guide members 340 are disposed on respective left and right sides of the air-conditioning unit 330 in the air-conditioning housing portion 230. Each guide member 340 is formed in a tubular shape. One end portion of each guide member 340 is connected to an air discharge port (not shown) formed in each of left and right side surfaces of the air-conditioning unit 330. The other end portion of each guide member 340 is connected to the second duct 302. A bottom surface of the guide member 340 is connected to the outlet 231 formed in the air-conditioning housing portion 230.

As shown in Fig. 3, the outer roof 32 is provided on an upper portion of the inner roof 31 configured in this manner. The inner roof 31 is closed from above by the outer roof 32.

Note that, in the present embodiment, an example in which recesses are formed in the upper surface of the inner roof 31 has been described, but the present invention is not limited thereto. For example, recesses may be formed not in the upper surface of the inner roof 31 but in a lower surface of the outer roof 32.

Next, a state of air circulation in the roof 30 configured as described above will be described.

In a case where air conditioning of the interior space of the cabin 10 is performed, the blower 320 and the air-conditioning unit 330 are operated. As shown in Fig. 12, the blower 320 feeds air in the introduction portion 210 to the first duct 301. Along with this, air is introduced into the introduction portion 210 from the outside air introduction port 211 or the interior air introduction port 212. Note that whether air is introduced from the outside air introduction port 211 or the interior air introduction port 212 can be selected by the inside-outside air switching mechanism 310.

Air introduced into the introduction portion 210 is fed to the air-conditioning unit 330 through the first duct 301. As described above, the first duct 301 is formed by closing the first guide portion 220 (recess) with the first cover member 250. By forming most of the first duct 301 (a portion excluding an upper portion) in the inner roof 31 in this manner, no separate tubular duct is required, and simplification of a configuration of the first duct 301 can be achieved.

Air fed to the air-conditioning unit 330 is air-conditioned (temperature adjustment and the like) by the air-conditioning unit 330. Air conditioned by the air-conditioning unit 330 is fed to the second duct 302 through the guide members 340 (see Fig. 11).

Air circulating through the guide members 340 is blown into the interior space of the cabin 10 from middle portions of the guide members 340 through the outlets 231. In addition, air fed to the second duct 302 through the guide members 340 is blown into the interior space of the cabin 10 through the outlets 241. As a result, air conditioning of the interior space of the cabin 10 can be performed.

As described above, the second duct 302 is formed by closing the second guide portion 240 (recess) with the second cover member 270. By forming most of the second duct 302 (a portion excluding an upper portion) in the inner roof 31 in this manner, simplification of a configuration of the second duct 302 can be achieved.

The inner roof 31 is also filled with a material having heat insulating properties (foam beads 31a shown in Fig. 14). In addition, the second cover member 270 is provided with the heat insulating material 280. By covering an outside of the second duct 302 with the heat insulating material 280 and the like in this manner, occurrence of condensation in the second duct 302 due to conditioned air from the air-conditioning unit 330 can be suppressed.

Note that a configuration for suppressing occurrence of condensation in the second cover member 270 is not limited to the present embodiment. For example, occurrence of condensation can also be suppressed by constituting the second cover member 270 with a heat insulating material (foamed resin or the like).

In the present embodiment, the first guide portion 220 and the second guide portion 240 are described as being covered with the first cover member 250 and the like, but the cover member is not limited to the first guide portion 220 and the like and may also cover other portions (introduction portion 210 and the like).

Next, a configuration of the outer roof 32 will be described.

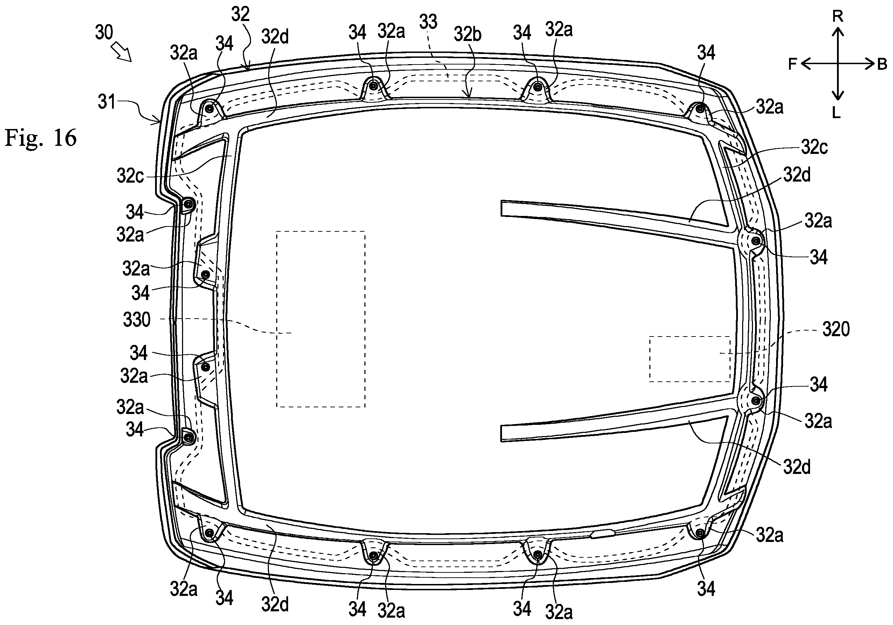

The outer roof 32 shown in Figs. 9 and 16 is formed in a substantially quadrangular shape having approximately the same size as the inner roof 31 in plan view so that the outer roof 32 can cover the inner roof 31 from above. An upper surface of the outer roof 32 is formed so as to gently incline downward from a front-rear middle portion toward front-rear outer sides. An upper surface of the outer roof 32 is also formed so as to gently incline downward from a left-right middle portion toward left-right outer sides. The outer roof 32 includes recesses 32a and a guide portion 32b.

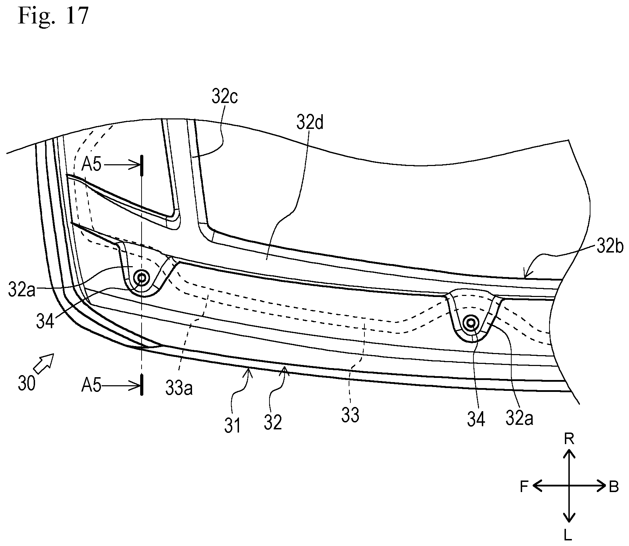

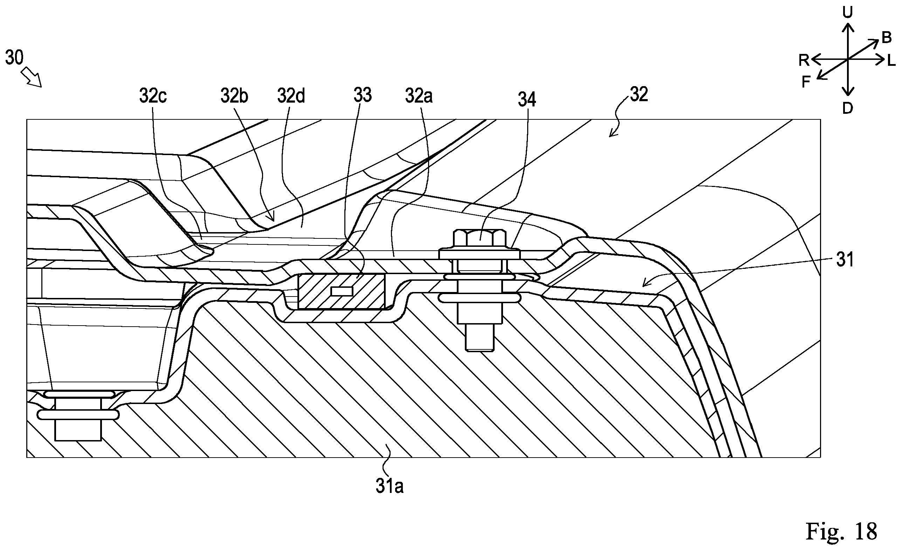

The recesses 32a shown in Figs. 17 and 18 are each a recessed portion in the upper surface of the outer roof 32. The recess 32a is formed so that a bottom surface faces upward. A plurality of the recesses 32a is formed. The plurality of recesses 32a is disposed along an outer edge of the outer roof 32 (see Fig. 16).

The guide portion 32b is for guiding water. The guide portion 32b is formed so as to be recessed in the upper surface of the outer roof 32. A depth of the guide portion 32b is greater than a depth of the recesses 32a. The guide portion 32b includes first portion 32c and second portions 32d.

The first portions 32c shown in Fig. 16 are formed so as to extend in the leftward-rightward direction. The first portions 32c are formed at respective front and rear end portions of the outer roof 32. The first portions 32c are each formed from a left portion to a right portion of the outer roof 32. The first portions 32c are each formed so as to follow a shape of the upper surface of the outer roof 32. More specifically, the first portion 32c is formed so as to gently incline downward from a left-right middle portion of the outer roof 32 toward left-right outer sides. As a result, the second portion 32d can guide water toward left-right outer sides of the outer roof 32.

The second portions 32d are formed so as to extend in the forward-backward direction. The second portions 32d are formed at respective left and right end portions and a left-right middle portion of the outer roof 32. The left and right second portions 32d located at the respective left and right end portions are each formed from a front end surface to a rear end surface of the outer roof 32. The left and right second portions 32d are connected to respective left and right end portions of the first portion 32c. The second portion 32d located at the left-right middle portion extends backward from a front-rear middle portion of the outer roof 32 and is connected to the first portion 32c at the rear side.

The second portions 32d are each formed so as to follow a shape of the upper surface of the outer roof 32. More specifically, the second portion 32d is formed so as to gently incline downward from the front-rear middle portion of the outer roof 32 toward front-rear outer sides. As a result, the second portion 32d can guide water toward front-rear outer sides of the outer roof 32. Water can also be discharged (dropped) from front and rear end portions of the left and right second portions 32d. As a result, the guide portion 32b can suppress accumulation of water on the upper surface of the outer roof 32.

The recess 32a is connected to either a front end surface of the outer roof 32 or the guide portion 32b. As a result, water in the recess 32a can be discharged through the front end surface or the guide portion 32b. In addition, because the guide portion 32b is deeper than the recess 32a (a bottom surface of the recess 32a is located at a position higher than a bottom surface of the guide portion 32b), water can be made more likely to flow from the recess 32a to the guide portion 32b (see Fig. 18). As a result, accumulation of water in the recess 32a can be effectively suppressed.

As shown in Fig. 9, the seal member 33 is provided between the outer roof 32 configured as described above and the inner roof 31. The seal member 33 is for sealing the outer roof 32 and the inner roof 31. The seal member 33 is constituted by an elastically deformable material (for example, rubber or the like). The seal member 33 is formed in a substantially rectangular annular shape in plan view so as to extend along an outer edge of the outer roof 32. The air-conditioning unit 330 and the blower 320 are disposed inside the seal member 33 in plan view (see Fig. 16).

As shown in Fig. 18, the outer roof 32 is fixed to the inner roof 31 by fasteners 34 such as bolts in a state in which the seal member 33 is disposed between the outer roof 32 and the inner roof 31. The seal member 33 is elastically deformed between the outer roof 32 and the inner roof 31. By the seal member 33, a space between the outer roof 32 and the inner roof 31 is sealed.

The fasteners 34 are also disposed so as to extend along the outer edge of the outer roof 32 (outer edge of the cabin 10 in plan view) by being attached to the respective recesses 32a shown in Fig. 16. By attaching the fasteners 34 to the recesses 32a in this manner, the fasteners 34 can be made less visible from an exterior of the cabin 10, and appearance can be improved.

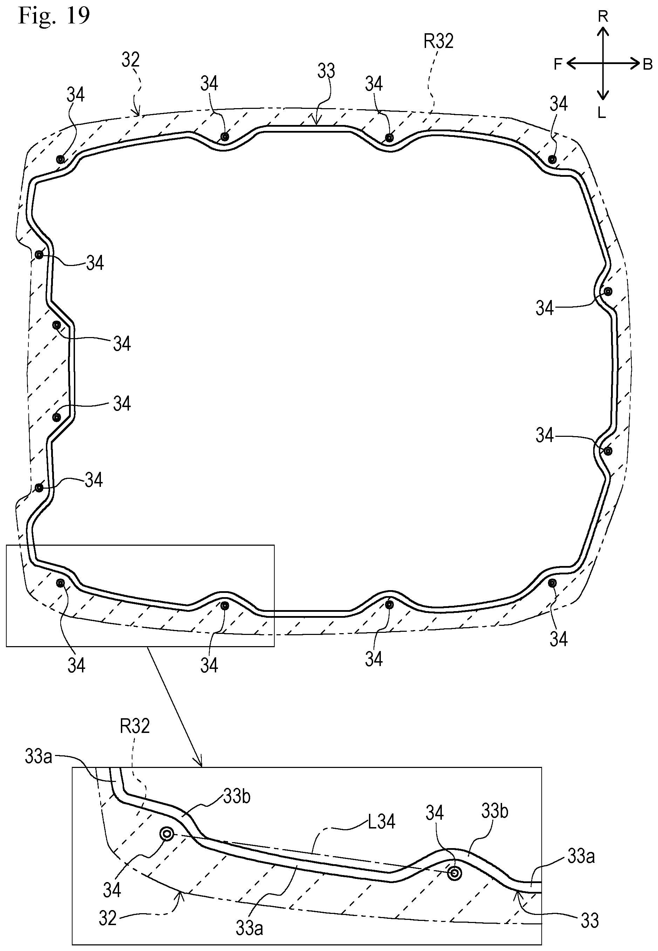

The fasteners 34 are also disposed outside the seal member 33 in plan view, as shown in Fig. 19. Specifically, the fasteners 34 are disposed on an outer edge portion side of the outer roof 32 relative to the seal member 33 in plan view (on an outer side in a horizontal direction). The fasteners 34 are disposed in a region R32 between the outer edge portion of the outer roof 32 and the seal member 33 in plan view.

According to this configuration, even in a case where water enters the roof 30 from between the outer roof 32 and the fasteners 34, entry of the water into an inner side of the roof 30 (inner side of the seal member 33 in plan view) can be suppressed. As a result, occurrence of a malfunction in devices disposed inside the seal member 33 (air-conditioning unit 330 and the like) can be suppressed.

Here, a line L34 shown in an enlarged portion of Fig. 19 is a straight line connecting two adjacent fasteners 34 along the outer edge of the outer roof 32. The seal member 33 of the present embodiment is disposed so as to cross the line L34. According to this configuration, the seal member 33 can be firmly fixed by the two adjacent fasteners 34. Below, the configuration will be described by taking a left front portion of the seal member 33 shown in Fig. 19 as an example. Below, the configuration will also be described by giving names of a first portion 33a and a second portion 33b to respective parts of the left front portion of the seal member 33.

The first portion 33a is formed on an outer side in a horizontal direction relative to the line L34 (on an outer edge portion side of the outer roof 32). The first portion 33a shown in Fig. 19 is formed outside the line L34 so as to extend along the outer edge of the outer roof 32.

The second portion 33b is formed with at least a part of the second portion 33b on an inner side in a horizontal direction relative to the fastener 34. The second portion 33b is formed so as to be continuous with the first portion 33a and so as to connect adjacent first portions 33a to each other. The second portion 33b bends so as to bypass the fastener 34 from an inner side of the fastener 34. The second portion 33b shown in Fig. 19 is formed in an arc shape in plan view.

The seal member 33 is disposed so as to straddle (cross) the line L34 by the above-described first portion 33a and second portion 33b. In this way, because a part of the seal member 33 is located on the line L34, the seal member 33 can be firmly fixed. Deformation of the outer roof 32 (upward deformation so as to open the roof 30) can also be suppressed by restoring force of the seal member 33. Note that, although the first portion 33a is described as being formed outside the line L34, the configuration is not limited to this configuration, and the first portion 33a may be formed on the line L34. For example, the first portion 33a can also be formed so as to overlap the line L34 in plan view (so as to extend along the line L34). In this way, even in a case where the seal member 33 is disposed without straddling the line L34 in plan view, the seal member 33 can be firmly fixed.

Note that, although the left front portion of the seal member 33 (enlarged portion of Fig. 19) has been described by way of example for convenience of explanation, other portions of the seal member 33 (for example, a right front portion, a rear portion, and the like) are also disposed so as to cross the line L34. As a result, the seal member 33 can be firmly fixed at a plurality of locations.

Note that the seal member 33 only needs to be capable of sealing the inner roof 31 and the outer roof 32, and a configuration of the seal member 33 is not limited to the present embodiment. For example, a shape of the seal member 33 in plan view is not limited to a rectangular annular shape and may be appropriately changed according to arrangement of devices in the roof 30 (air-conditioning unit 330 and the like), a shape of the outer roof 32, and the like. The seal member 33 is also described as crossing the line L34 shown in Fig. 19, but depending on arrangement of the fasteners 34 and the like, the seal member 33 may also be disposed so as not to cross the line L34.

Here, as described above, air-conditioned air from the air-conditioning unit 330 is blown into the cabin 10 through the outlets 231 and 241 (see Fig. 12). By applying the air-conditioned air to the door 40 to warm the door 40, snow adhering to the door 40 can be melted.

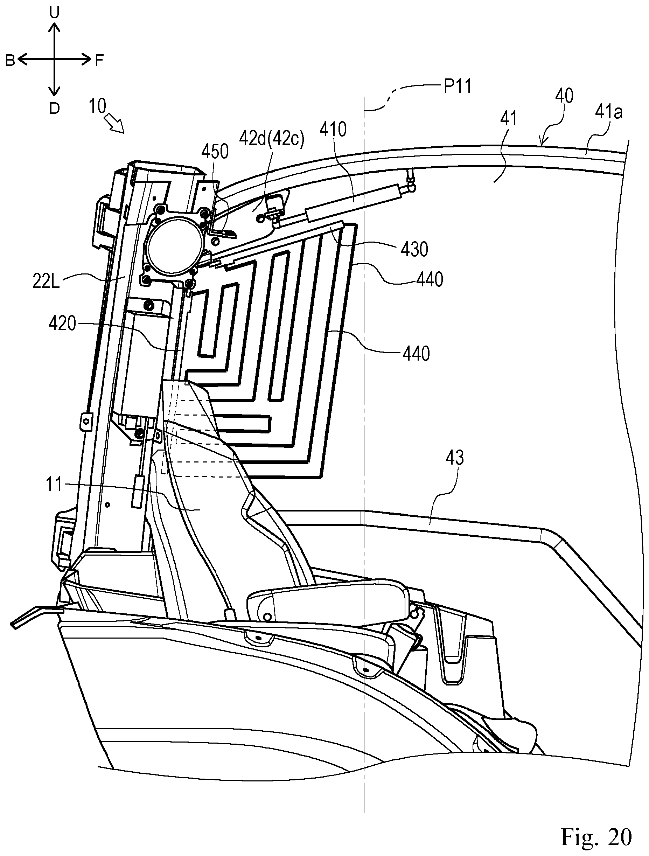

In the present embodiment, not only the air-conditioned air but also heating wires 440 warm a rear portion of the door 40. As a result, snow adhering to the rear portion of the door 40 can be effectively melted, and therefore a field of view through the rear portion of the door 40 can be secured. Below, the heating wires 440 and configurations around the heating wires 440 will be described. Specifically, configurations of the door 40, a door damper 410, a first bus bar 420, a second bus bar 430, the heating wires 440, a first fixing member 450, a second fixing member 460, and a harness 470 shown in Figs. 20 to 22 will be described.

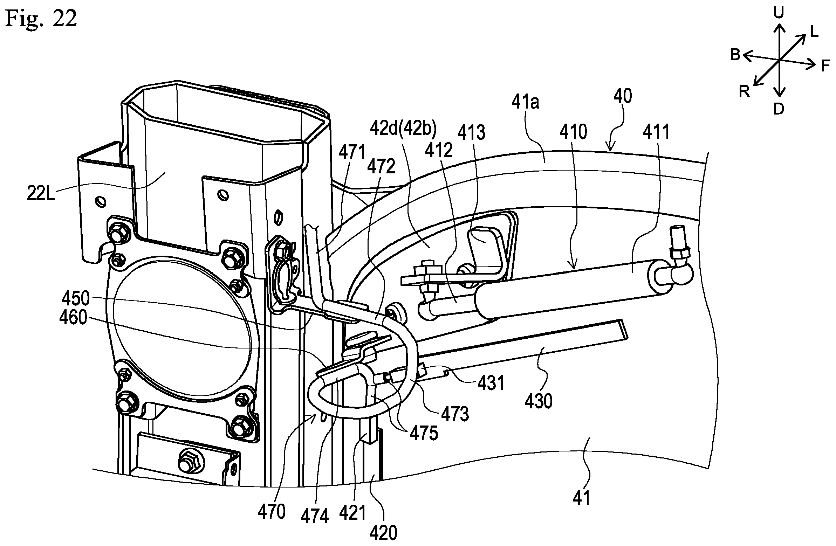

The doors 40 and the like are provided on respective left and right sides of the cabin 10. Note that, because the left and right doors 40 and the like are configured symmetrically, the configuration of the doors 40 and the like will be described below by taking the left door 40 and the like as an example. In addition, illustration of the harness 470 is omitted in Figs. 20 and 21 for convenience of explanation. In addition, illustration of the heating wires 440 is omitted in Fig. 22 for convenience of explanation.

The door 40 has a panel 41 made of glass. The panel 41 is formed in a substantially plate shape having approximately the same size as the entrances/exits of the cabin 10 (left and right side portions). A door seal member 41a is provided over an entire region of an outer edge portion of the panel 41. The panel 41 is rotatably supported by the left rear pillar 22L through the above-described pair of upper and lower hinges 42 (see Fig. 4). The fixed portion 42b of the hinge 42 is also fixed to a rear end portion of the panel 41. More specifically, the fixed portion 42b of the upper hinge 42 is fixed to a rear upper end portion of the panel 41. In addition, the fixed portion 42b of the lower hinge 42 is fixed to a rear lower end portion of the panel 41.

In addition, as shown in Fig. 20, the inner side surface of the panel 41 is provided with a handrail 43 gripped by an occupant when opening or closing the door 40 from an inner side. The handrail 43 is formed by a rod-shaped metal member. A rear end portion of the handrail 43 is fixed to the fixed portion 42b of the lower hinge 42. A front end portion of the handrail 43 is fixed to a front lower portion of the panel 41.

The door damper 410 is for urging the door 40. The door damper 410 is provided between the panel 41 and the left side beam 25L (see Fig. 3). The door damper 410 is configured to be extendable and retractable and to return toward a natural length (maximum extended length). As shown in Figs. 21 and 22, the door damper 410 includes a cylinder tube 411, which is a cylindrical member having gas enclosed therein, and a piston rod 412, which is a substantially cylindrical member housed in the cylinder tube 411. The piston rod 412 is urged in a direction in which the piston rod 412 protrudes relative to the cylinder tube 411 (direction in which the door damper 410 extends) by receiving pressure of gas in the cylinder tube 411.

The cylinder tube 411 is disposed substantially in the forward-backward direction. The piston rod 412 is also disposed so as to protrude backward relative to the cylinder tube 411. A distal end portion (rear end portion) of the cylinder tube 411 is rotatably connected to a stay 413 fixed to the inner fixed portion 42d of the fixed portion 42b about a rotational axis extending substantially in the upward-downward direction. In this way, the door damper 410 is attached to the inner fixed portion 42d through the stay 413. A distal end portion (front end portion) of the piston rod 412 is rotatably connected to the left side beam 25L about a rotational axis extending substantially in the upward-downward direction.

For example, in a state where the door 40 is closed, the door damper 410 urges the door 40 in a closing direction. In addition, in a state where the door 40 is fully opened, the door damper 410 urges the door 40 in an opening direction. Note that, although illustration is omitted, the door damper 410 is also provided between the panel 41 and the left side lower frame 27L (below the door damper 410 shown in Fig. 20).

The first bus bar 420 and the second bus bar 430 shown in Figs. 20 to 22 are electrodes for energizing the heating wires 440. The first bus bar 420 is formed in an elongated shape extending vertically. The first bus bar 420 is fixed to a rear end portion on the inner side surface of the panel 41 and is disposed between the pair of upper and lower hinges 42 (inner fixed portions 42d) in the upward-downward direction. An upper end portion of the first bus bar 420 is connected to the harness 470 to be described later through the first terminal 421.

The second bus bar 430 is fixed to a rear upper end portion of the panel 41. The second bus bar 430 is formed in an elongated shape and is disposed so as to incline upward toward the front. A rear end portion of the second bus bar 430 is connected to the harness 470 to be described later through the second terminal 431.

The heating wires 440 shown in Figs. 20 and 21 are for warming the panel 41. A plurality of the heating wires 440 is provided on the inner side surface of the panel 41. One end portion of each heating wire 440 is connected to the first bus bar 420. The other end portion of each heating wire 440 is connected to the second bus bar 430. A middle portion of each heating wire 440 is bent appropriately so as not to interfere with another heating wire 440.

The heating wires 440 are disposed at a rear portion of the panel 41. Specifically, the heating wires 440 are disposed backward of a front-rear center of the panel 41 in the forward-backward direction. In the present embodiment, the heating wires 440 are provided behind a reference position set in advance with respect to the seat 11. The reference position is a seat index point (SIP) P11. The seat index point P11 refers to a reference point of the seat 11 defined in a vicinity of a joint between a torso and thighs of a theoretical occupant. Note that the reference position is not limited to the present embodiment (seat index point P11), and a position different from the seat index point P11 can also be used as the reference position.

The heating wires 440 generate heat when energized between the first bus bar 420 and the second bus bar 430. As a result, the rear portion of the panel 41 is warmed, and snow adhering to the panel 41 can be melted, or frost and fogging can be removed. Therefore, deterioration of a field of view through the rear portion of the door 40 can be suppressed.

The heating wires 440 are also disposed above the handrail 43. As a result, because the heating wires 440 can be disposed at an appropriate position (height close to a face of an occupant seated on the seat 11), obstruction of a field of view of the occupant by snow and the like can be effectively suppressed.

Note that the heating wires 440 only need to be disposed at the rear portion of the panel 41, and a configuration of the heating wires 440 is not limited to the present embodiment. For example, a rear portion of the door 40 can also be warmed by one heating wire 440. The heating wires 440 can also warm a portion below the handrail 43.

The first fixing member 450 shown in Figs. 21 and 22 is for fixing the harness 470 to the left rear pillar 22L. The first fixing member 450 is formed in a substantially L-shape in side view. The first fixing member 450 is fixed to an upper end portion of a front side surface of the left rear pillar 22L (position higher than the first bus bar 420).

The second fixing member 460 is for fixing the harness 470 to the inner fixed portion 42d. The second fixing member 460 is formed in a substantially flat plate shape with a plate surface facing substantially upward. The second fixing member 460 is fixed to the inner fixed portion 42d and is disposed so as to protrude from the inner fixed portion 42d toward an inner side of the cabin 10 in the leftward-rightward direction. The second fixing member 460 is disposed below the first fixing member 450 in side view.

The harness 470 shown in Fig. 22 is for connecting a power source and the heating wires 440 (for enabling energization between the first bus bar 420 and the second bus bar 430). The harness 470 is formed so as to extend between the first bus bar 420 and the second bus bar 430, and the power source. The harness 470 is formed in an elongated (linear) shape and has flexibility. Fig. 22 shows an end portion of the harness 470 on a heating wire 440 side in a state in which the door 40 is closed.

The harness 470 (end portion on the heating wire 440 side) of the present embodiment is bent in a state in which the door 40 is closed by being fixed to the first fixing member 450 and the second fixing member 460. As a result, an installation space can be reduced. Below, fixing and disposing the harness 470 will be specifically described by giving names of a first extension portion 471, a second extension portion 472, a bent portion 473, a third extension portion 474, and a branched portion 475 to respective portions of the harness 470 in the state in which the door 40 is closed.

The harness 470 (end portion on the heating wire 440 side) extends downward along the front side surface of the left rear pillar 22L (see the first extension portion 471). The harness 470 also extends forward from a lower end portion of the first extension portion 471 and passes above the first fixing member 450 (see the second extension portion 472). The second extension portion 472 is fixed to the left rear pillar 22L through the first fixing member 450. In this way, because the harness 470 is fixed near a pivot point of the door 40, large movement of the harness 470 during opening and closing of the door 40 can be suppressed, and breakage of the harness 470 can be suppressed.

The harness 470 is also bent so as to fold back from a front end portion of the second extension portion 472 toward the left rear pillar 22L (backward), and then is bent toward the second fixing member 460 (leftward) (see the bent portion 473). The harness 470 also extends leftward from the bent portion 473 and passes below the second fixing member 460 (see the third extension portion 474). The third extension portion 474 is fixed to the inner fixed portion 42d (door 40) of the hinge 42 through the second fixing member 460. In this way, because a portion of the harness 470 on a heating wire 440 side relative to the second extension portion 472 is fixed, large movement of the harness 470 during opening and closing of the door 40 can be effectively suppressed.

The harness 470 is also formed so as to branch into two branches at a left end portion of the third extension portion 474 (see the branched portion 475). One branch of the branched portion 475 is connected to the first bus bar 420 through the first terminal 421. The other branch of the branched portion 475 is connected to the second bus bar 430 through the second terminal 431.

Note that although illustration is omitted, the end portion of the harness 470 on the heating wire 440 side is covered with a cover member having flexibility. For example, the second extension portion 472 and the bent portion 473 are covered with the cover member. As a result, the harness 470 can be protected.

As described above, the cabin 10 for a working vehicle according to the present embodiment includes the inner roof 31 that constitutes a ceiling of an interior of the cabin 10, the outer roof 32 provided on an upper side of the inner roof 31, the seal member 33 that seals the inner roof 31 and the outer roof 32, and the fasteners 34 (fixing members) that are disposed outside the seal member 33 in plan view and fix the inner roof 31 and the outer roof 32 to each other (see Fig. 16).

With such a configuration, a space between the inner roof 31 and the outer roof 32 can be effectively sealed.

In addition, the seal member 33 is formed in an annular shape in plan view.

With such a configuration, flow of water to an inner side of the seal member 33 can be suppressed.

In addition, a plurality of the fasteners 34 is provided, and the seal member 33 is disposed so as to cross a line connecting two adjacent fasteners 34 (see Fig. 19).

With such a configuration, the seal member 33 can be firmly fixed.

In addition, the plurality of the fasteners 34 is provided so as to extend along an outer edge of the cabin 10 (see Fig. 16).

With such a configuration, the inner roof 31 and the outer roof 32 can be fixed along the outer edge of the cabin 10.

In addition, the fasteners 34 are attached to the recesses 32a formed in the upper surface of the outer roof 32 (see Fig. 18).

With such a configuration, the fasteners 34 can be made less visible.

In addition, the outer roof 32 is formed so as to be recessed in an upper surface and includes the guide portion 32b that is connected to the recesses 32a and guides water.

With such a configuration, water can be discharged from the recesses 32a to the guide portion 32b, and therefore accumulation of water in the recesses 32a can be suppressed.

In addition, the recesses 32a are located at positions higher than the guide portion 32b.

With such a configuration, accumulation of water in the recesses 32a can be effectively suppressed.

Note that the fastener 34 according to the present embodiment is one form of the fixing member.

In addition, as described above, the cabin 10 for a working vehicle according to the present embodiment includes the inner roof 31 that constitutes a ceiling of an interior of the cabin 10, the outer roof 32 provided on an upper side of the inner roof 31, the first guide portion 220 and the second guide portion 240 (recesses) formed in either one of an upper surface of the inner roof 31 and a lower surface of the outer roof 32, and the first cover member 250 and the second cover member 270 (cover members) that, by covering the first guide portion 220 and the second guide portion 240, form the duct 300, which is an air circulation path, with the first guide portion 220 and the second guide portion 240 (see Fig. 11).

With such a configuration, a structure of the duct 300 can be prevented from becoming complex, and simplification of the configuration can be achieved.

In addition, between the inner roof 31 and the outer roof 32, the air-conditioning unit 330 for air-conditioning an interior of the cabin 10 and the blower 320 for sucking air and feeding the air to the air-conditioning unit 330 are housed, and a space between the air-conditioning unit 330 and the blower 320 is formed so that air can circulate through the first duct 301 (duct 300).

With such a configuration, air can be guided from the blower 320 to the air-conditioning unit 330 with a simple configuration.

In addition, between the inner roof 31 and the outer roof 32, the air-conditioning unit 330 for air-conditioning an interior of the cabin 10 is housed, the inner roof 31 is formed with the outlet 241 opening to the interior of the cabin 10, and a space between the air-conditioning unit 330 and the outlet 241 is formed so that air can circulate through the second duct 302 (duct 300).

With such a configuration, air can be guided from the air-conditioning unit 330 to the outlet 241 with a simple configuration.

In addition, the second cover member 270 is provided with the heat insulating material 280 (see Fig. 15(b)).

With such a configuration, occurrence of condensation can be suppressed.

In addition, the second cover member 270 is constituted by a heat insulating material.

With such a configuration, occurrence of condensation can be suppressed.

In addition, the first guide portion 220 and the second guide portion 240 are formed in an upper surface of the inner roof 31, and the inner roof 31 is filled with the foam beads 31a (material having heat insulating properties) (see Figs. 13 and 14).

With such a configuration, occurrence of condensation can be suppressed.

In addition, the cabin 10 further includes seal members that seal the recesses and the cover members. In the present embodiment, as an example of the seal members, the first seal member 260 that seals the first guide portion 220 and the first cover member 250, and the second seal member 290 that seals the second guide portion 240 and the second cover member 270 are described.

With such a configuration, air leakage from between the first guide portion 220 and the first cover member 250 and from between the second guide portion 240 and the second cover member 270 can be suppressed.

In addition, the first cover member 250 and the second cover member 270 include the abutment portions 252 and 272 brought into abutment with the first seal member 260 and the second seal member 290, and the first ribs 253 and 273 that reinforce the abutment portions 252 and 272.

With such a configuration, deformation of the first cover member 250 and the second cover member 270 (abutment portions 252 and 272) can be suppressed.

In addition, the cabin 10 further includes the fasteners 254a (first fixing member) that fix the first cover member 250 and the second cover member 270 to either one of the inner roof 31 and the outer roof 32, and the cover members include the attachment portions 254 and 274 to which the fasteners 254a are attached and the second ribs 255 and 275 that reinforce the attachment portions 254 and 274.

With such a configuration, deformation of the first cover member 250 and the second cover member 270 (attachment portions 254 and 274) can be suppressed.

In addition, the second guide portion 240 houses the fastener 31b (second fixing member) that fixes the inner roof 31 to the cabin frame 20, and the second cover member 270 includes the opening 276 formed at a position corresponding to the fastener 31b and the opening/closing portion 277 capable of opening and closing the opening 276 (see Fig. 14).

With such a configuration, attachment/detachment and the like of the fastener 31b can be performed through the opening 276, and therefore workability can be improved.

Note that the first guide portion 220 and the second guide portion 240 according to the present embodiment are one form of the recesses.

In addition, the first cover member 250 and the second cover member 270 according to the present embodiment are one form of the cover members.

In addition, the first seal member 260 and the second seal member 290 according to the present embodiment are one form of the seal members.

In addition, the fasteners 254a according to the present embodiment are one form of the first fixing member.

In addition, the fasteners 31b according to the present embodiment is one form of the second fixing member.

In addition, as described above, the cabin 10 for a working vehicle according to the present embodiment includes the door 40 that has the panel 41 made of glass and opens and closes the entrances/exits of the cabin 10, and the heating wires 440 capable of warming a rear portion of the panel 41 (see Fig. 20).

With such a configuration, deterioration of a field of view through a rear portion of the door 40 can be suppressed.

In addition, the cabin 10 further includes the seat 11 provided in the interior of the cabin 10 for an occupant to sit on, and the heating wires 440 are provided behind a reference position set in advance with respect to the seat 11.

With such a configuration, deterioration of a field of view of a rear side portion (rear side in side view) of the door 40 relative to the reference position of the seat 11 can be suppressed.

In addition, the reference position is the seat index point P11.

With such a configuration, deterioration of a field of view of a rear side portion (rear side in side view) of the door 40 relative to the seat index point P11 can be suppressed.

In addition, the cabin 10 further includes the left rear pillar 22L and the right rear pillar 22R (pillars) that support the door 40 openably and closably, the harness 470 that connects a power source and the heating wires 440, and the first fixing members 450 that fix the harness 470 to the left rear pillar 22L and the right rear pillar 22R (see Fig. 22).

With such a configuration, large movement of the harness 470 during opening and closing of the door 40 can be suppressed, and breakage of the harness 470 can be suppressed.

In addition, the cabin 10 further includes the second fixing member 460 that fixes, to the door 40, a portion of the harness 470 on a heating wire 440 side relative to a portion fixed by the first fixing member 450.

With such a configuration, large movement of the harness 470 during opening and closing of the door 40 can be effectively suppressed.

In addition, the cabin 10 further includes the hinge 42 having the fixed portion 42b (inner fixed portion 42d) fixed to a rear end portion of the door 40 and the rotational shaft 42a that rotatably supports the fixed portion 42b relative to the left rear pillar 22L, and the second fixing member 460 is attached to the fixed portion 42b of the hinge 42 (see Figs. 4 and 21).

With such a configuration, the second fixing member 460 can be fixed to the door 40 by using the fixed portion 42b of the hinge 42, and therefore simplification of the configuration can be achieved.

In addition, the door damper 410 is attached to the fixed portion 42b.

With such a configuration, the door damper 410 can be attached by using the fixed portion 42b of the hinge 42, and therefore simplification of the configuration can be achieved.

In addition, the cabin 10 further includes the four-post cabin frame 20.

With such a configuration, deterioration of a field of view through a rear portion of the door 40 provided on the four-post cabin frame 20 can be suppressed.

Note that the left rear pillar 22L and the right rear pillar 22R according to the present embodiment are one form of the pillars.

In addition, as described above, the cabin 10 for a working vehicle according to the present embodiment is the cabin 10 for a working vehicle having the roof 30 in which the duct 300 for guiding air is formed, and includes the left rear pillar 22L (rear pillar) provided at a rear portion of the cabin 10 and capable of guiding outside air to the roof 30, the filter 120 that purifies outside air introduced into the left rear pillar 22L, the filter housing portion 130 that houses the filter 120, and the louver 140 disposed on a cabin-exterior side relative to the filter housing portion 130 and provided so as to inhibit circulation of foreign matter (see Fig. 5).

With such a configuration, clogging of the filter 120 with foreign matter can be suppressed.

In addition, the louver 140 includes the slats 142 formed so as to extend upward from the cabin-exterior side toward the cabin-interior side (see Fig. 8).

With such a configuration, foreign matter is made less likely to pass through the slats 142, and clogging of the filter 120 with foreign matter can be suppressed.

In addition, a plurality of the slats 142 is provided, and is disposed so that at least some portions overlap each other as viewed from the cabin-exterior side.

With such a configuration, clogging of the filter 120 with foreign matter can be effectively suppressed.

In addition, the slats 142 include the body portions 142a extending upward from the cabin-exterior side toward the cabin-interior side and the upper bent portions 142c formed so as to bend upward from end portions of the body portions 142a on the cabin-interior side.

With such a configuration, clogging of the filter 120 with foreign matter can be effectively suppressed.

In addition, the slats 142 include the body portions 142a extending upward from the cabin-exterior side toward the cabin-interior side and the lower bent portions 142b formed so as to bend downward from end portions of the body portions 142a on the cabin-exterior side.

With such a configuration, clogging of the filter 120 with foreign matter can be effectively suppressed.

In addition, the louver 140 further includes the support portion 141 that supports the slats 142 and is attached to the filter housing portion 130.

With such a configuration, the louver 140 can be installed by using the filter housing portion 130, and therefore simplification of the configuration can be achieved.

In addition, the filter housing portion 130 is formed with the projecting portion 133 (cover portion) that covers an upper end portion of the support portion 141 from above.

With such a configuration, adherence of water to the filter 120 after traveling along between the upper end portion of the support portion 141 and the filter housing portion 130 can be suppressed.

Note that the left rear pillar 22L according to the present embodiment is one form of the rear pillar.

In addition, the projecting portion 133 according to the present embodiment is one form of the cover portion.

Although an embodiment of the present invention has been described above, the present invention is not limited to the above configuration, and various modifications are possible within a scope of the invention described in the claims.

For example, in the above embodiment, the tractor 1 has been described by way of example as the working vehicle, but another agricultural vehicle, construction vehicle, industrial vehicle, or the like may be used.

In addition, the configurations (shapes, sizes, numbers, and the like) of the respective members described in the above embodiment are not limiting and can be changed as desired.

In addition, in the present embodiment, a configuration in which outside air is introduced into the roof 30 through the left rear pillar 22L has been described, but the present invention is not limited to this configuration. For example, a configuration in which outside air is introduced into the roof 30 through the right rear pillar 22R is also possible. In addition, a configuration in which air is circulated not only through the rear pillars (the left rear pillar 22L and the right rear pillar 22R) but also through another member constituting the cabin frame 20 (for example, the left front pillar 21L, the right front pillar 21R, and the like) is also possible.

In addition, arrangement of various devices in the roof 30 is not limiting and can be changed as desired. For example, the air-conditioning unit 330 can also be disposed at a rear portion of the roof 30. In addition, the blower 320 and the air-conditioning unit 330 can also be disposed so as to be adjacent to each other (or directly connected to each other).

### INDUSTRIAL APPLICABILITY

The present invention can be applied to a cabin for a working vehicle.

### REFERENCE SIGNS LIST

1: Tractor
10: Cabin
22L: Left rear pillar
31: Inner roof
32: Outer roof
32b: Guide portion
33: Seal member
34: Fastener
40: Door
41: Panel
120: Filter
130: Filter housing portion
140: Louver
150: First cover member
170: Second cover member
300: Duct
440: Heating wire

## Claims

1. A cabin for a working vehicle having a roof in which a duct for guiding air is formed, the cabin comprising:
a rear pillar provided at a rear portion of the cabin and capable of guiding outside air to the roof;
a filter that purifies outside air introduced into the rear pillar;
a filter housing portion that houses the filter; and
a louver disposed on a cabin-exterior side relative to the filter housing portion and provided so as to inhibit circulation of foreign matter.

2. The cabin for a working vehicle according to claim 1, wherein the louver includes a slat formed so as to extend upward from the cabin-exterior side toward a cabin-interior side.

3. The cabin for a working vehicle according to claim 2, wherein a plurality of the slats is provided, and is disposed so that at least some portions of the slats overlap each other as viewed from the cabin-exterior side.

4. The cabin for a working vehicle according to claim 2, wherein the slat includes
a body portion extending upward from the cabin-exterior side toward the cabin-interior side, and
an upper bent portion formed so as to bend upward from an end portion of the body portion on the cabin-interior side.

5. The cabin for a working vehicle according to claim 3 or 4, wherein the slat includes
a body portion extending upward from the cabin-exterior side toward the cabin-interior side, and
a lower bent portion formed so as to bend downward from an end portion of the body portion on the cabin-exterior side.

6. The cabin for a working vehicle according to claim 2 or 3, wherein the louver further includes a support portion that supports the slat, and is attached to the filter housing portion.

7. The cabin for a working vehicle according to claim 6, wherein the filter housing portion is formed with a cover portion that covers an upper end portion of the support portion from above.
